# EUROPÄISCHE PATENTSCHRIFT

(11) **EP 3 286 615 B1**
(45) Veröffentlichungstag und Bekanntmachung des Hinweises auf die Patenterteilung: **09.12.2020**
(21) Anmeldenummer: 16717912.6
(22) Anmeldetag: 20.04.2016
(51) Int. Cl.: H04L 12/40

(54) **VERFAHREN ZUM AUSTAUSCH EINER STEUERUNGSEINHEIT IN EINER FÖRDERVORRICHTUNG**
METHOD FOR REPLACING A CONTROL UNIT IN A CONVEYING DEVICE
PROCÉDÉ DE REMPLACEMENT D'UNE UNITÉ DE COMMANDE DANS UN DISPOSITIF DE TRANSPORT

(30) Priorität: 20.04.2015 DE 102015106026
(43) Veröffentlichungstag der Anmeldung: 28.02.2018
(73) Patentinhaber: Interroll Holding AG, 6592 Sant' Antonino (CH)
(72) Erfinder: HENZE, Herbert, 42929 Wermelskirchen (DE); HEINEN, Daniel, 42929 Wermelskirchen (DE)
(74) Vertreter: Kohlhof, Stephan
(86) Internationale Anmeldenummer: PCT/EP2016/058764
(87) Internationale Veröffentlichungsnummer: WO 2016/169986

(56) Entgegenhaltungen:
- EP-A1- 1 865 393
- EP-A2- 1 770 458
- EP-B1- 1 875 724
- DE-A1- 10 040 438
- DE-A1-102006 005 365
- DE-A1-102012 205 709
- DE-A1-102013 207 760
- DE-C1- 19 934 514
- US-A1- 2012 290 126
- US-A1- 2013 211 546

## Beschreibung

Die Erfindung betrifft ein Verfahren zum Ersetzen einer defekten Steuerungseinheit in einer bus-vernetzten Fördervorrichtung, wobei die Fördervorrichtung eine erste Steuerungseinheit mit einer ersten Busadresse und eine zweite Steuerungseinheit mit einer zweiten Busadresse umfasst, wobei die erste Steuerungseinheit ein erstes Fördersegment steuert und die zweite Steuerungseinheit ein zweites Fördersegment steuert, und die erste Steuerungseinheit und die zweite Steuerungseinheit mittels einer Buskommunikation verbunden sind.

Fördervorrichtungen dieser Art werden in Logistikprozessen zur voll- und teilautomatisierten Förderung von Transportgut eingesetzt und befördern beispielsweise Pakete, Paletten, Waren und andere Güter von einem Ausgangsort zu einem Zielort. Ausgangsorte und Zielorte sind in komplexen Förderanlagen mitunter weit voneinander entfernt. Sie werden durch Fördersegmente miteinander verbunden. Ein Fördersegment kann hierbei einen Streckenabschnitt einer Förderstrecke bilden, der einen durch die Steuerungseinheit ansteuerbaren Förderantrieb und gegebenenfalls eine Sensor zur Erfassung eines Transportguts in dem Fördersegment beinhaltet. Ein Fördersegment kann auch durch eine Verzweigung, eine Zusammenführung, eine Hebe- oder Absenkvorrichtung, eine Sortiervorrichtung oder eine Vereinzelungsvorrichtung gebildet werden die diesen Einrichtungen eigenen entsprechenden Aktuatoren und Sensoren können durch die jeweilige Steuerungseinheit des Fördersegments angesteuert und überwacht werden. Die Fördersegmente bilden die Architektur einer Förderanlage. Mit ihnen lassen sich komplexe Fördervorrichtungen realisieren.

Die Steuerungseinheiten überwachen und steuern ein oder mehrere dieser Fördersegmente. Die Überwachung und Beeinflussung des Förderprozesses innerhalb der Fördersegmente geschieht mit Hilfe geeigneter Sensoren und Aktuatoren. Geeignete Sensoren müssen je nach Bedarf die räumliche Lage, die Größe, die Identifizierung u. a. Parameter von Steuerelementen und Fördergut erkennen. In diesem Zusammenhang sind typische Sensoren zum Beispiel Lichtschranken, Lichttaster, optische Scanner oder Näherungsschalter. Mit den Aktuatoren wird das Fördergut bewegt, gebremst und in Lage- oder Richtung verändert. Typische Aktuatoren sind, z. B. pneumatische oder hydraulische Zylinder, Schrittmotoren, Rollenantriebe, Bandantriebe, Vibrationsantriebe u. a.

Ein Fördersegment kann üblicherweise einen Zonensensor, eine Mehrzahl von Förderrollen und mindestens einen Förderantrieb umfassen. Ein Zonensensor ist zum Beispiel eine Lichtschranke, ein Lichttaster, ein optischer Scanner oder ein Näherungsschalter. Ein Förderantrieb ist zum Beispiel eine Motorrolle, ein Trommelmotor oder ein Getriebemotor mit Kupplungselement. Förderrollen, Motorrollen und Trommelmotoren werden üblicherweise in einem Rahmengestell befestigt und bewegen das Transportgut durch den Kontakt mit den angetriebenen Rollen.

Eine Steuerungseinheit kontrolliert den Förderprozess, wie z. B. im Einzelnen den Aktivitätszustand des Förderantriebs sowie dessen Drehrichtung. Weiterhin besitzen Steuerungseinheiten von Fördersegmenten in der Regel eine Schnittstelle, über die Steuerungsbefehle von einer zentralen Kontrolleinheit oder von benachbarten Steuerungseinheiten benachbarter Fördersegmente empfangen werden können. Diese meist digitalen Schnittstellen basieren auf standardisierten Kommunikationsbussen wie beispielsweise EtherCAT, Ethernet/IP, Profibus, ASi, wodurch eine Buskommunikation zwischen oder zu den einzelnen Steuerungseinheiten der Fördersegmente ermöglicht wird. Durch den Einsatz von bus-vernetzten Fördervorrichtungen lassen sich Steuerungsaufgaben dezentralisieren. Vorteilig daran ist, dass Grundfunktionen in einer Steuerungseinheit hinterlegt werden können und so Installation, Einrichtung und Wartung von Fördervorrichtungen vereinfacht werden können.

Steuerungseinheiten für Fördervorrichtungen sind grundsätzlich bekannt. In US 8,757,363B2 , werden Aspekte einer Steuerungseinheit in einer Förderstreckensteuerung beschrieben. Es werden verschiedene Betriebsmodi zur Förderung von Transportgut beschrieben sowie Verfahren zur Einrichtung von Fördervorrichtungen. In EP 1454851B1 wird ein Verfahren beschrieben, welches in einer Steuerungseinheit implementiert ist und in Kombination mit weiteren Steuerungseinheiten Rollenförderer mehrerer Förderzonen in einer beschriebenen Vorgehensweise steuert, um den Transportfluss zu beeinflussen.

In Fördervorrichtungen ist es erforderlich, Stillstandzeiten der Fördervorrichtung auf ein Minimum zu reduzieren und so die mit dem Stillstand verbundenen wirtschaftlichen Ausfälle gering zu halten. Stillstandzeiten resultieren beispielsweise aus Störungen des Transportflusses oder aus Störungen oder Verschleiß an der mechanischen Konstruktion der Fördervorrichtung. Weiterhin können Störungen aus dem Defekt von elektronischen Komponenten, wie der Steuerungseinheit, resultieren. Während Störungen des Transportflusses, wie zum Beispiel Verklemmung von Transportgut meist schnell durch manuelles Eingriffen durch einen Anwender behoben werden können, sind Störungen der mechanischen Komponenten einer Fördervorrichtung meist zeitaufwändiger in der Behebung. Durch die Definition von Wartungsintervallen und regelmäßigen Kontrollen lässt sich hier einem Ausfall vorbeugen. Für elektronische Komponenten ist die Definition von Wartungsintervallen unüblich, da sich ein Ausfall in der Regel nicht vorhersehen oder an Verschleißerscheinungen festmachen lässt. Ein Ausfall elektronischer Komponenten erfolgt daher in den überwiegenden Fällen akut. Zudem können die sensitiven elektronischen Komponenten auch durch verlassen der elektrischen Eingangsparameter oder durch mechanische Einwirkung, z. B. durch Kollisionen mit Fahrzeugen oder Werkstücken beschädigt oder zerstört werden.

Defekte an elektronischen Komponenten sind meist irreparabel und erfordern einen Komplettaustausch der Komponenten oder kompletter Baugruppen. Ein Austausch einzelner elektronischer Komponenten oder elektronischer Baugruppen einer Steuerungseinheit, z. B. in Form von Leiterplatten, ist im Umfeld einer Fördervorrichtung impraktikabel. Vielmehr wird eine defekte Steuerungseinheit einer Fördervorrichtung durch eine funktionsfähige Steuerungseinheit ersetzt. Hierzu sind moderne Steuerungseinheiten mitunter technisch so ausgelegt, dass nur wenige elektrische Verbindungen hergestellt werden müssen, um den Austausch einer Steuerungseinheit zu vereinfachen. Dennoch erfordert ein Austauschen einer Steuerungseinheit üblicherweise qualifiziertes Personal zur Konfiguration und Systemintegration der ausgetauschten Steuerungseinheit. Hieraus können nennenswerte Stillstandzeiten der Fördervorrichtung resultieren und damit verbunden entsprechende wirtschaftliche Ausfälle.

In US 8,757,363 B und in DE 10 2013 207 760 A1 wird ein Verfahren zum Austauschen und Konfigurieren einer Steuerungseinheit beschrieben, wobei eine ausgetauschte Steuerungseinheit selbsttätig eine Konfigurationsanfrage an andere Steuerungseinheiten der Fördervorrichtung aussendet, und hierdurch eine Erstkonfiguration der ausgetauschten Steuerungseinheit mittels einer Sicherungskopie der Konfiguration der defekten Steuerungseinheit, durchgeführt wird. Nachteilig an diesem Verfahren ist jedoch, dass durch eine defekte Steuerungseinheit erheblicher Schaden an den transportierten Gegenständen auftreten kann. Zudem besteht die Gefahr, dass durch solche Defekte Stauungen der Gegenstände verursacht werden, wodurch Folgeschäden an anderen Komponenten der Förderanlage hervorgerufen werden können.

Eine Anforderung an eine Fördervorrichtung besteht heutzutage somit darin, das Risiko einer Beschädigung von Komponenten der Fördervorrichtung zu verringern und Stillstände zu reduzieren.

Diese Aufgabe wird erfindungsgemäß durch ein Verfahren der eingangs erläuterten Art gelöst, welches die folgenden Schritte aufweist:
i) Erkennung des Defekts der zweiten Steuerungseinheit durch die erste Steuerungseinheit
ii) Wechsel der ersten Steuerungseinheit in einen Konfigurationsmodus, wenn die erste Steuerungseinheit den Defekt der zweiten Steuerungseinheit erkennt
iii) Einbinden einer dritten Steuerungseinheit in die Buskommunikation nachdem die erste Steuerungseinheit in den Konfigurationsmodus versetzt ist
iv) Übertragen einer individuellen Busadresse aus der ersten Steuerungseinheit an die dritte Steuerungseinheit
v) Abspeichern der von der ersten Steuerungseinheit übertragenen individuellen Busadresse in der dritten Steuerungseinheit

Unter einer Steuerungseinheit soll eine elektronische Schaltung verstanden werden, die mindestens ein Fördersegment überwachen und steuern kann. Vorteilhafterweise werden durch eine Steuerungseinheit mehrere Fördersegmente, beispielsweise vier Fördersegmente, überwacht und gesteuert. Weiterhin soll unter einem Konfigurationsmodus ein Modus verstanden werden, in dem eine Steuerungseinheit eine andere Steuerungseinheit mittels der Buskommunikation konfigurieren kann.

Das erfindungsgemäße Verfahren ermöglicht das Erkennen eines Defekts einer Steuerungseinheit sowie die Konfiguration einer ausgetauschten Steuerungseinheit. Gemäß dem erfindungsgemäßen Verfahren wird in einem ersten Schritt der Defekt einer zweiten Steuerungseinheit durch eine erste Steuerungseinheit erkannt, woraufhin die erste Steuerungseinheit in einen Konfigurationsmodus wechselt. Diese Fehlererkennung kann beispielsweise anhand eines Steuerungsverhaltensmusters des zweiten Fördersegments erkannt werden, indem dieses Muster mit einem Soll-Muster verglichen wird. Der Konfigurationsmodus soll es ermöglichen, einer unkonfigurierten dritten Steuerungseinheit selbsttätig eine individuelle Busadresse zuzuweisen. Unter einer unkonfigurierten Steuerungseinheit wird eine Steuerungseinheit verstanden, in der zumindest einige, insbesondere alle zur Überwachung und Steuerung eines Fördersegments erforderlichen individuellen Parameter noch nicht konfiguriert worden sind. Es ist bevorzugt, dass die erste Steuerungseinheit trotz des Wechsels in den Konfigurationsmodus weiterhin die Kontrolle über das erste Fördersegment ausübt. Insbesondere kann der Konfigurationsmodus in der ersten Steuerungseinheit nebenläufig zu den eigentlichen Steuerungsaufgaben ausgeführt werden und die erste Steuerungseinheit die Förderung stoppen, das als defekt erkannte zweite Fördersegment als "belegt" registrieren oder vorprogrammierte Maßnahmen treffen, um einen Stau aufzulösen. Dies erlaubt einen sofortigen Stopp des Fördervorgangs bei Auftreten eines Defekts und die Vermeidung von Folgeschäden.

Befindet sich eine Steuerungseinheit in einem Konfigurationsmodus, so ist es bevorzugt vorgesehen, dass die Steuerungseinheit eine Konfigurationsaufforderung, die durch eine Zahlenfolge, ein Kommando, ein Buspaket oder ein Token umgesetzt werden kann, aussendet und von allen in die Buskommunikation eingebundenen Steuerungseinheiten empfangen werden kann. Bei der Buskommunikation kann es sich um eine drahtgebundene Buskommunikation, wie beispielsweise EtherCAT, Ethernet/IP oder Profinet handeln. Weiterhin können unter eine Buskommunikation auch drahtlose funkbasierte Buskommunikationen, wie z. B. WirelessHART, Wireless-IO, Wireless-Profinet, ZigBee, Bluetooth oder auf dem IEEE 802.11 Standard basierte Kommunikationsbusse verstanden werden. Die Topologie der Vernetzung kann dabei beispielsweise Bus-, Ring-, Stern- oder Maschentopologie annehmen. Unter einem Einbinden einer Steuerungseinheit kann eine elektrische Kopplung mit Busleitungen, z. B. mittels Schneidklemmtechnik, Steckverbinder oder kapazitiver Kopplung, oder auch das Einbinden in ein Netzwerk, z. B. durch übermitteln einer Hardwareadresse an andere in den Kommunikationsbus eingebundene Teilnehmer oder einer Anmeldung an einen Netzwerkserver verstanden werden.

Die Aussendung der Konfigurationsaufforderung wird erfindungsgemäß vorzugsweise von einer unkonfigurierten Steuerungseinheit weiterverarbeitet. Steuerungseinheiten, die bereits über eine Konfiguration verfügen, verarbeiten diese Konfigurationsaufforderung vorzugsweise nicht weiter. Es kann weiterhin bevorzugt sein, dass das Aussenden der Konfigurationsaufforderung durch die erste Steuerungseinheit in einer vorbestimmten Weise wiederholt erfolgt.

Wird eine dritte Steuerungseinheit in die Buskommunikation eingebunden, überträgt die erste Steuerungseinheit, die sich in dem Konfigurationsmodus befindet, eine Konfigurationsaufforderung, die insbesondere die individuelle Busadresse der als defekt erkannten zweiten Steuerungseinheit enthält, an die dritte Steuerungseinheit. Die dritte Steuerungseinheit speichert und übernimmt die empfangene individuelle Busadresse, wodurch die dritte Steuerungseinheit mittels der Buskommunikation adressierbar wird.

Erfindungsgemäß kann die Zuweisung der individuellen Busadresse selbsttätig durch die erste Steuerungseinheit erfolgen, sobald die dritte Steuerungseinheit in die Buskommunikation eingebunden wird. Dies ist besonders vorteilhaft, da ein Programmiervorgang durch einen Anwender entfällt und die Konfiguration der individuellen Busadresse der dritten Steuerungseinheit selbsttätig erfolgt. Hieraus resultieren eine Zeitersparnis, eine Vereinfachung des Austausches und die Durchführbarkeit eines Austausches unter Verzicht auf Servicepersonal.

Das Verfahren kann fortgebildet werden, indem die zweite Steuerungseinheit ein Aktivitätssignal über die Busleitungen sendet und die erste Steuerungseinheit das Aktivitätssignal der zweiten Steuerungseinheit empfängt und die Erkennung des Defekts der zweiten Steuerungseinheit in Schritt i) durch das Ausbleiben des Empfangs des Aktivitätssignals der zweiten Steuerungseinheit in der erste Steuerungseinheit erfolgt, insbesondere dass die zweite Steuerungseinheit in regelmäßigen vorbestimmten Zeitintervallen ein Aktivitätssignal sendet und die Erkennung einer defekten Steuerungseinheit durch das Ausbleiben des Empfangs des Aktivitätssignals innerhalb des vorbestimmten Zeitintervalls nach Empfang eines vorhergehenden Aktivitätssignals erfolgt.

Unter einem Aktivitätssignal wird ein Signal verstanden, das die zweite Steuerungseinheit an die erste Steuerungseinheit sendet. Ein Aktivitätssignal kann als ein elektrisches Signal, eine Zahlenfolge, ein Kommando, ein Buspaket oder ein Token aufgefasst werden. Ein Aktivitätssignal wird dabei während des regulären Betriebs durch eine Steuerungseinheit ausgesendet. Vorzugsweise erfolgt das Aussenden des Aktivitätssignals in vorbestimmten Zeitabständen. Hierdurch kann in vorbestimmten Zeitabständen die Funktionsfähigkeit der zweiten Steuerungseinheit überprüft werden. Ebenso kann es bevorzugt sein, dass die Aussendung des Aktivitätssignals bei der Erstinbetriebnahme oder jedem Neustart der Fördervorrichtung im Rahmen eines Selbsttests erfolgt. Empfängt die erste Steuerungseinheit kein Aktivitätssignal der zweiten Steuerungseinheit, wird die zweite Steuerungseinheit durch die erste Steuerungseinheit als defekt erkannt. Insbesondere sollte der Empfang eines Aktivitätssignals innerhalb eines ersten Zeitintervalls erfolgen, um die ordnungsgemäße Funktion der zweiten Steuerungseinheit zu bestätigen. Bei einer Zeitüberschreitung des ersten Zeitintervalls kann die zweite Steuerungseinheit als defekt aufgefasst werden. Um Fehlerkennungen vorzubeugen, kann es weiterhin bevorzugt sein, dass bei planmäßiger unregelmäßiger Aussendung des Aktivitätssignals durch die zweite Steuerungseinheit erst dann, wenn eine Mehrzahl von Aussendungen bzw. Empfang des Aktivitätssignals ausbleibt, auf einen Defekt der zweiten Steuerungseinheit geschlossen wird. Ein planmäßiges unregelmäßiges Aussenden oder Empfangen des Aktivitätssignals kann zum Beispiel darin begründet sein, dass die erste oder zweite Steuerungseinheit mit Steuerungsprozessen ausgelastet ist oder dass die Buskommunikation durch die Übertragung von Daten anderer Steuerungseinheiten belegt ist und eine Übertragung zu einem späteren Zeitpunkt erfolgen muss.

Gemäß einer weiteren bevorzugten Ausführungsform ist vorgesehen, dass die erste Steuerungseinheit durch das Ausbleiben des Empfangs des Aktivitätssignals in den Konfigurationsmodus versetzt wird.

Mittels dieser Ausführungsform wird ermöglicht, dass eine Steuerungseinheit im Zuge eines Selbsttests selbsttätig einen Teildefekt erkennen kann und die in die Buskommunikation eingebundene erste Steuerungseinheit über den selbsterkannten Defekt informiert. Ein Teildefekt kann als eine fehlende oder unvollständige Busadresse, ein Defekt in der Elektronik der Steuerungseinheit oder eine unvollständige oder inkonsistente Konfiguration verstanden werden. Diese Ausführungsform kann vorteilhaft sein, da durch die selbsttätig ausgelöste Konfiguration der zweiten Steuerungseinheit, durch die erste Steuerungseinheit, Ausfälle der Förderanlage vermieden werden können. Insbesondere erfordert diese Ausführungsform keinen manuellen Eingriff durch Servicepersonal.

Gemäß einer weiteren bevorzugten Ausführungsform ist es vorgesehen, dass bei Ausbleiben des Empfangs des Aktivitätssignals in der ersten Steuerungseinheit eine Fehlermeldung durch die erste Steuerungseinheit generiert wird und mittels der Buskommunikation übertragen wird.

Unter einer Fehlermeldung ist eine Zahlenfolge, ein Kommando, ein Buspaket oder ein Token zu verstehen. Diese Fehlermeldung, die vorzugsweise an alle in die Buskommunikation eingebundenen Steuerungseinheiten übertragen wird, kann dazu verwendet werden, um im Falle eines Defektes einer Steuerungseinheit vorkonfigurierte Maßnahmen für die gesamte Fördervorrichtung durchzuführen. Durch die Fehlermeldung können beispielsweise die Steuerungseinheiten der Fördervorrichtung dazu veranlasst werden, alle Fördersegmente zu stoppen, um beispielsweise ein Auflaufen von Transportgut zu verhindern und einer Beschädigung des Transportguts vorzubeugen. Die Fehlermeldung kann ein akustisches, optisches oder digitales Signal an der defekten Steuerungseinheit oder deren beiden benachbarten Steuerungseinheiten auslösen, um diese schnell aufzufinden. Weiterhin kann eine Fehlermeldung in einer Leitwarte empfangen werden und das dortige Leitwartenpersonal über den Defekt einer Steuerungseinheit informiert werden. Das Leitwartenpersonal kann dann unmittelbar den Austausch einer Steuerungseinheit veranlassen und so die Ausfallzeiten der Fördervorrichtung verringern.

Weiterhin ist es bevorzugt, dass die dritte Steuerungseinheit ein Präsenzsignal aussendet, nachdem sie in die Buskommunikation eingebunden wurde, und die erste Steuerungseinheit durch den Empfang des Präsenzsignals von der dritten Steuerungseinheit in den Konfigurationsmodus versetzt wird. Unter einem Präsenzsignal wird hier ein Signal verstanden, das dann ausgesendet wird, wenn eine unkonfigurierte Steuerungseinheit in die Buskommunikation eingebunden wird. Dieses Präsenzsignal kann als eine Zahlenfolge, ein Kommando, ein Buspaket oder ein Token aufgefasst werden. Dieses Präsenzsignal ermöglicht ergänzend zu dem Aktivitätssignal eine Aktivierung des Konfigurationsmodus der ersten Steuerungseinheit. Mittels dieser Ausführungsform wird es ermöglicht, dass die erste Steuerungseinheit die dritten Steuerungseinheit als unkonfiguriert erkennt, sobald die dritte Steuerungseinheit in die Buskommunikation eingebunden wird und dadurch aktiv die erste Steuerungseinheit in einen Konfigurationsmodus versetzt, um eine Busadresse zugewiesen zu bekommen.

Weiterhin ist es bevorzugt, dass die dritte Steuerungseinheit integriert wird, wobei die zweite Steuerungseinheit entfernt wird oder die zweite Steuerungseinheit verbleibt. Erfindungsgemäß ist es unerheblich, ob die defekte Steuerungseinheit in dem Fördersegment verbleibt oder ob sie entfernt wird. Hieraus resultiert insbesondere auch, dass die Reihenfolge eines Austausches nicht vorgeschrieben ist. Es kann bevorzugt sein, dass eine dritte Steuerungseinheit in einem ersten Schritt in die Fördervorrichtung integriert wird, um die Ausfallzeit der Fördervorrichtung gering zu halten. Die defekte zweite Steuerungseinheit kann dann im laufenden Betrieb der Fördervorrichtung aus der Fördervorrichtung entfernt werden oder in dieser verbleiben.

Weiterhin ist es bevorzugt, dass im Schritt v) die dritte Steuerungseinheit die individuelle Busadresse nur dann abspeichert, wenn die dritte Steuerungseinheit eine Nachricht der ersten Steuerungseinheit empfängt, die die erste Busadresse der ersten Steuerungseinheit und eine individuelle Busadresse, die der dritten Steuerungseinheit zugewiesen werden soll, enthält. Dies kann vorteilhaft sein, wenn sich zeitgleich eine Mehrzahl von Steuerungseinheiten in einer Fördervorrichtung in einem Defektzustand befindet. Erfindungsgemäß kann eine Mehrzahl von Steuerungseinheiten in einen Konfigurationsmodus versetzt sein und Konfigurationsaufforderung mittels der Buskommunikation aussenden. Um eine unzulässige Konfiguration zu vermeiden, ist es daher bevorzugt, dass eine Überprüfung der Anzahl und der Nachricht der Konfigurationsaufforderung in einer unkonfigurierten Steuerungseinheit erfolgt.

Weiterhin ist es bevorzugt, dass ein drittes Fördersegment eine vierte Steuerungseinheit mit einer vierten Busadresse umfasst und die dritte Steuerungseinheit die individuelle Busadresse im Schritt v) nur dann abspeichert, wenn die dritte Steuerungseinheit zwei Nachrichten empfängt, wobei die erste Nachricht von der ersten Steuerungseinheit ausgesendet wurde und die erste Busadresse der ersten Steuerungseinheit enthält und die Busadresse, die der dritten Steuerungseinheit zugewiesen werden soll, enthält und die zweite Nachricht von der vierten Steuerungseinheit ausgesendet wurde und die vierte Busadresse der vierten Steuerungseinheit enthält und die Busadresse, die der dritten Steuerungseinheit zugewiesen werden soll, enthält und die individuelle Busadresse, die der dritten Steuerungseinheit zugewiesen werden soll, in beiden Nachrichten identisch ist.

Dies kann vorteilhaft sein, wenn sich zeitgleich eine Mehrzahl von Steuerungseinheiten in einer Fördervorrichtung in einem Defektzustand befindet. Erfindungsgemäß kann eine Mehrzahl von Steuerungseinheiten in einen Konfigurationsmodus versetzt sein und Konfigurationsaufforderung mittels der Buskommunikation aussenden. Um eine unzulässige Konfiguration zu vermeiden, ist es daher bevorzugt, dass eine Überprüfung der Anzahl und der Nachricht der Konfigurationsaufforderung in einer unkonfigurierten Steuerungseinheit erfolgt.

Des Weiteren ist es bevorzugt, dass in einem vorherigen Sicherungsschritt die zweite Busadresse der zweiten Steuerungseinheit in der ersten Steuerungseinheit abgespeichert wurde und vorzugsweise die erste Busadresse der ersten Steuerungseinheit in der zweiten Steuerungseinheit abgespeichert wurde, insbesondere dass die Busadresse benachbarter Steuerungseinheiten wechselseitig abgespeichert wurden und die dritte Steuerungseinheit mittels der abgespeicherten Busadresse der zweiten Steuerungseinheit konfiguriert wird mit den Schritten:
a) Aussenden der abgespeicherten zweiten Busadresse der zweiten Steuerungseinheit an die dritte Steuerungseinheit und empfangen durch die dritte Steuerungseinheit
b) Abspeichern der durch die dritte Steuerungseinheit empfangenen zweiten Busadresse der zweiten Steuerungseinheit in der dritten Steuerungseinheit
c) Abspeichern der ersten Busadresse der ersten Steuerungseinheit in der dritten Steuerungseinheit.

Gemäß dieser Ausführungsform kann trotz eines Defekts der zweiten Steuerungseinheit die ursprüngliche Busadresse der zweiten Steuerungseinheit wiederhergestellt werden und in eine dritte Steuerungseinheit übertragen werden. Durch die Zuweisung der ursprünglichen Busadresse der zweiten Steuerungseinheit ist die dritte Steuerungseinheit mittels der Buskommunikation adressierbar und kann Steuerungskommandos empfangen.

In dem vorherigen Sicherungsschritt wird zumindest die zweite Busadresse der zweiten Steuerungseinheit räumlich außerhalb der zweiten Steuerungseinheit abgespeichert und so eine Sicherungskopie der Busadresse angelegt. Vorzugsweise wird diese Sicherungskopie in einer benachbarten Steuerungseinheit abgespeichert. Dieser Sicherungsschritt kann beispielsweise bei der Erstinstallation der Fördervorrichtung oder beim Aufstarten der Fördervorrichtung oder durch Veranlassung durch ein Anwender oder selbsttätig veranlasst durch die Steuerungseinheiten erfolgen. Durch diesen Sicherungsschritt wird einem Verlust einer Busadresse einer konfigurierten Steuerungseinheit durch den Defekt einer Steuerungseinheit vorgebeugt. Insbesondere ist es bevorzugt, dass Busadressen von benachbarten Steuerungseinheiten wechselseitig abgespeichert werden, wodurch mindestens eine Sicherungskopie der Busadresse existiert. Die hierdurch erzeugte Informationsredundanz kann im Falle eines Defekts einer Steuerungseinheit dazu verwendet werden, die verlorengegangene Busadresse der defekten Steuerungseinheit zu wiederherzustellen. Diese Rekonstruktion erfolgt durch Übertragen der abgespeicherten Busadresse mittels der Buskommunikation in die dritte Steuerungseinheit. Vorzugsweise befindet sich die erste Steuerungseinheit in einem Konfigurationsmodus, in dem die erste Steuerungseinheit Konfigurationsaufforderungen mittels der Buskommunikation an eine dritte Steuerungseinheit aussendet. Die dritte Steuerungseinheit sollte vorzugsweise mit einer Grundkonfiguration ausgestattet sein, so dass die dritte Steuerungseinheit Informationen mittels der Buskommunikation empfangen und verarbeiten kann. Nach Abspeichern der Busadresse kann die dritte Steuerungseinheit anhand der Busadresse adressiert werden und gegebenenfalls weitere Konfigurationen durchgeführt werden. Weiterhin können Kommandos an die dritte Steuerungseinheit übertragen werden und Kontrolle über dieses Fördersegment ausgeübt werden. Gemäß dieser Ausführungsform ist es möglich eine selbsttätige Zuweisung einer Busadresse an die dritte Steuerungseinheit zu realisieren. Dies ist besonders vorteilhaft, da diese Ausführungsform auf einen Eingriff eines Anwenders verzichtet und die manuelle Konfiguration einer Steuerungseinheit vermeidet. Weiterhin werden durch dieses selbsttätige Verfahren Fehlkonfigurationen vermieden, wie sie durch einen unachtsamen Anwender auftreten könnten. Der Austausch einer defekten Steuerungseinheit kann somit zeitsparend durchgeführt werden und die Wahrscheinlichkeit einer Fehlkonfiguration kann verringert werden.

Weiterhin ist es bevorzugt, dass in einem vorherigen Sicherungsschritt eine Konfiguration der zweiten Steuerungseinheit in der ersten Steuerungseinheit abgespeichert wurde und vorzugsweise eine Konfiguration der ersten Steuerungseinheit in der zweiten Steuerungseinheit abgespeichert wurde, insbesondere dass die Konfigurationen benachbarter Steuerungseinheiten wechselseitig abgespeichert wurden, und die dritte Steuerungseinheit mittels einer abgespeicherten Konfiguration der zweiten Steuerungseinheit konfiguriert wird.

Unter einer Konfiguration sollen hier die Parameter verstanden werden, die für den Betrieb des Fördersegments erforderlich sind. Hierzu zählen beispielsweise die Drehrichtungen der Förderantriebe, die Fördergeschwindigkeiten, die Fördermodi u. a.

In dem vorherigen Sicherungsschritt wird zumindest die Konfiguration der zweiten Steuerungseinheit räumlich außerhalb der zweiten Steuerungseinheit abgespeichert und so eine Sicherungskopie der Konfiguration angelegt. Vorzugsweise wird diese Sicherungskopie in einer benachbarten Steuerungseinheit abgespeichert. Dieser Sicherungsschritt kann beispielsweise bei der Erstinstallation der Fördervorrichtung oder beim Aufstarten der Fördervorrichtung oder durch Veranlassung durch einen Anwender oder selbsttätig veranlasst durch die Steuerungseinheiten erfolgen. Durch diesen Sicherungsschritt wird einem Verlust einer Konfiguration einer konfigurierten Steuerungseinheit vorgebeugt. Insbesondere ist es bevorzugt, dass Konfigurationen von benachbarten Steuerungseinheiten wechselseitig abgespeichert werden wodurch mindestens eine Sicherungskopie einer Konfiguration existiert. Die hierdurch erzeugte Informationsredundanz kann im Falle eines Defekts der zweiten Steuerungseinheit dazu verwendet werden, die verlorengegangene Konfiguration der defekten Steuerungseinheit in einer dritten Steuerungseinheit zu rekonstruieren und so die zweite Steuerungseinheit funktional zu ersetzen. Diese Rekonstruktion kann vorzugsweise durch das Übertragen der abgespeicherten Konfiguration mittels der Buskommunikation in eine dritte Steuerungseinheit erfolgen.

Vorzugsweise befindet sich die erste Steuerungseinheit in einem Konfigurationsmodus, in dem die erste Steuerungseinheit Konfigurationsaufforderungen mittels der Buskommunikation an eine die dritte Steuerungseinheit aussendet. Die dritte Steuerungseinheit sollte vorzugsweise mit einer Grundkonfiguration ausgestattet sein, so dass die dritte Steuerungseinheit Informationen mittels der Buskommunikation empfangen und verarbeiten kann.

Gemäß dieser Ausführungsform ist es möglich eine selbsttätige Zuweisung einer Busadresse an die dritte Steuerungseinheit zu realisieren. Dies ist besonders vorteilhaft, da diese Ausführungsform auf einen Eingriff eines Anwenders verzichtet und die manuelle Konfiguration einer Steuerungseinheit vermeidet. Weiterhin werden durch dieses selbsttätige Verfahren Fehlkonfigurationen vermieden, wie sie durch einen unachtsamen Anwender auftreten könnten. Der Austausch einer defekten Steuerungseinheit kann somit zeitsparend durchgeführt werden und die Wahrscheinlichkeit einer Fehlkonfiguration kann verringert werden.

Weiterhin ist es bevorzugt, dass in einem vorherigen Sicherungsschritt die Busadresse, oder zusätzlich eine Konfiguration der zweiten Steuerungseinheit, in einer Steuerungseinheit eines nicht direkt benachbarten Fördersegments abgespeichert wurde und wechselseitig die Busadresse, oder zusätzlich eine Konfiguration, der nicht direkt benachbarten Steuerungseinheit, in der zweiten Steuerungseinheit abgespeichert wurden.

Eine Fördervorrichtung kann aus einer Vielzahl von Steuerungseinheiten bestehen, die mittels der Buskommunikation Daten austauschen können. Es kann daher bevorzugt sein, dass die Busadresse oder zusätzlich die Konfiguration einer Steuerungseinheit in einer weiter entfernten Steuerungseinheit abgespeichert wird. Dies ist immer dann von Vorteil, wenn direkt benachbarte Steuerungseinheiten simultan einen Defekt erleiden. Eine simultane Zerstörung benachbarter Steuerungseinheiten kann beispielsweise durch mechanische Einwirkung durch ein Werkstück oder ein Fahrzeug erfolgen oder auch durch Überschreiten elektrischer Parameter auf der Versorgungsleitung oder einer leitungsgebundenen Buskommunikation. Durch Abspeichern der Busadresse, oder zusätzlich einer Konfiguration, in einer weiterentfernten Steuerungseinheit, kann die Wahrscheinlichkeit für den Verlust dieser Informationen verringert werden.

Weiterhin ist es bevorzugt, dass in einem vorherigen Sicherungsschritt die Busadresse, oder zusätzlich eine Konfiguration, der zweiten Steuerungseinheit in einer Mehrzahl von Steuerungseinheiten abgespeichert wurde und wechselseitig die Busadressen, oder zusätzlich die Konfigurationen, der Mehrzahl von Steuerungseinheiten, in der zweiten Steuerungseinheit abgespeichert wurden. Dies ist immer dann von Vorteil, wenn direkt benachbarte Steuerungseinheiten simultan einen Defekt erleiden. Eine simultane Zerstörung benachbarter Steuerungseinheiten kann beispielsweise durch mechanische Einwirkung durch ein Werkstück oder ein Fahrzeug erfolgen oder auch durch Überschreiten elektrischer Parameter auf der Versorgungsleitung oder einer leitungsgebundenen Buskommunikation. Durch Abspeichern der Busadresse, oder zusätzlich einer Konfiguration, in einer Mehrzahl von Steuerungseinheiten, kann die Wahrscheinlichkeit für den Verlust dieser Informationen verringert werden. Insbesondere ist es bevorzugt, dass diese Mehrzahl von Steuerungseinheiten nicht direkt benachbart sind, sondern über die Fördervorrichtung räumlich beabstandeten Fördersegmenten zugeordnet sind. Somit werden die gesicherten Busadressen, oder zusätzlich die Konfigurationen, räumlich verteilt und so eine Redundanz der Informationen erzeugt wodurch die Wahrscheinlichkeit für den Verlust dieser Informationen verringert wird.

Weiterhin ist es bevorzugt, dass in einem vorherigen Sicherungsschritt die zweite Busadresse der zweiten Steuerungseinheit, oder zusätzlich die Konfiguration der zweiten Steuerungseinheit,
- in einer Sicherungseinheit abgespeichert wurde oder
- in einer speicherprogrammierbaren Steuerung abgespeichert wurde oder
- in einem Web-Server abgespeichert wurde,
insbesondere dass die individuellen Busadresse, oder zusätzlich die Konfigurationen, aller in die Buskommunikation eingebundenen Steuerungseinheiten zentral in einer Einheit abgespeichert wurden.

Das Speichern von Busadressen und Konfigurationen von Steuerungseinheiten in einer zentralen Einheit kann vorteilhaft sein, da sämtliche Busadressen und Konfigurationen der Steuerungseinheiten der Fördervorrichtung in einer Einheit abgespeichert werden. Hierdurch kann beispielsweise selektiv und zentral eine Busadresse oder Konfiguration einer Steuerungseinheit abgerufen werden. So kann beispielsweise eine spezialisierte Sicherungseinheit in die Buskommunikation eingebundenen werden, die dafür ausgelegt ist selbsttätig Busadressen und Konfigurationen der in die Buskommunikation eingebundenen Steuerungseinheiten abzuspeichern. In einer anderen Ausführung kann es vorgesehen sein, dass die Busadressen und Konfigurationen der Steuerungseinheiten in einer speicherprogrammierbaren Steuerung abgespeichert werden. Dies kann vorteilhaft sein, da eine Vielzahl von Fördervorrichtungen über speicherprogrammierbare Steuerungen verfügen und bereits in die Buskommunikation einer Fördervorrichtung eingebunden ist. In vielen Fällen verfügen speicherprogrammierbare Steuerungen zudem über ausreichend Speicherplatz, um eine Vielzahl von Busadressen, oder zusätzlich die Konfigurationen, von Steuerungseinheiten abzuspeichern.

In einer weiteren Ausführungsform ist es bevorzugt, dass die Busadressen und Konfigurationen in einem Webserver abgelegt werden und so zentral über verschiedene Schnittstellen des Webservers abrufbar sind. Mittels eines Webservers lassen sich Informationen über die Busadressen und Konfigurationen der Steuerungseinheiten auf End- oder Mobilgeräten mit Netzwerkzugang abrufen und ein Zugriff auf diese Informationen unabhängig von Betriebssystemen und Anwendungsprogrammen realisieren.

Weiterhin ist es bevorzugt, dass die Konfiguration die vollständige Betriebssoftware einer Steuerungseinheit umfasst.

Unter einer Betriebssoftware soll eine Software verstanden werden, die innerhalb einer Steuerungseinheit ausgeführt wird und die Funktionen der Steuerungseinheit implementiert. Solch eine Betriebssoftware, die in Geräten oder Systemen integriert wird, kann z. B. durch Weiterentwicklungen und Fehlerbehebungen, in verschiedenen Versionen vorliegen. Es ist weiterhin nicht ausgeschlossen, dass verschiedene Versionen einer Betriebssoftware einer Steuerungseinheit inkompatibel sein können. Das erfindungsgemäße Verfahren kann in diesem Fall vorteilhaft angewendet werden, da es die Konfiguration einer unkonfigurierten Steuerungseinheit, mit einer zuvor innerhalb der Fördervorrichtung eingesetzten Betriebssoftware, konfigurieren kann. Insbesondere kann darauf verzichtet werden, die dritte Steuerungseinheit mit einer bestimmten Version einer Betriebssoftware auszustatten. Somit kann sichergestellt werden, dass die Betriebssoftware der dritten Steuerungseinheit kompatibel ist zu der ersten Steuerungseinheit. Hierdurch reduziert sich die Variantenzahl von Steuerungseinheiten, die für einen Austausch vorgehalten werden müssen, wodurch sich die Beschaffung von Ersatz und die Lagerhaltung vereinfachen können und ein Austausch wird vereinfacht.

Eine weitere Anforderung an eine Fördervorrichtung besteht heutzutage darin, dass eine Konfiguration einer Fördervorrichtung möglichst zeiteffizient ausgetauscht werden kann.

Diese Aufgabe wird durch ein Verfahren gelöst, welches die folgenden Schritte aufweist:
i) Erkennung eines Defekts der zweiten Steuerungseinheit durch die erste Steuerungseinheit
ii) Wechsel der ersten Steuerungseinheit in einen Konfigurationsmodus, wenn die erste Steuerungseinheit den Defekt der zweiten Steuerungseinheit erkennt
iii) Einbinden einer dritten Steuerungseinheit in die Buskommunikation, nachdem die erste Steuerungseinheit in den Konfigurationsmodus versetzt ist
iv) Übertragen einer Konfiguration aus der ersten Steuerungseinheit an die dritte Steuerungseinheit oder aus der dritten Steuerungseinheit an die erste Steuerungseinheit
v) Abspeichern der von der ersten Steuerungseinheit übertragenen Konfiguration in der dritten Steuerungseinheit oder Abspeichern der von der dritten Steuerungseinheit übertragenen Konfiguration in der ersten Steuerungseinheit.

Das erfindungsgemäße Verfahren ermöglicht das Übertragen einer Konfiguration von der ersten Steuerungseinheit an die dritte Steuerungseinheit, um die möglicherweise unkonfigurierte dritte Steuerungseinheit mit einer Konfiguration zu versehen. Ebenso kann eine Konfiguration aus einer möglicherweise vorkonfigurierten dritten Steuerungseinheit an die erste Steuerungseinheit übertragen werden, um die erste Steuerungseinheit mit der Konfiguration der dritten Steuerungseinheit zu versehen. Unter einer vorkonfigurierten Steuerungseinheit wird eine Steuerungseinheit verstanden, in der zumindest einige, insbesondere alle zur Überwachung und Steuerung eines Fördersegments erforderlichen individuellen Parameter konfiguriert worden sind. Eine Konfiguration wird dabei über die bereits erwähnte Buskommunikation von einer Steuerungseinheit an eine andere Steuerungseinheit übertragen. Eine übertragene Konfiguration kann dann in der Steuereinheit, die die Konfiguration empfangen hat, abgespeichert oder verworfen werden.

Erfindungsgemäß kann die Übertragung einer Konfiguration selbsttätig durch die erste oder dritte Steuerungseinheit erfolgen, sobald die dritte Steuerungseinheit in die Buskommunikation eingebunden wird. Dies ist besonders vorteilhaft, da eine Konfiguration oder ein Programmiervorgang durch einen Anwender entfällt und die Konfiguration der ersten oder dritten Steuerungseinheit automatisiert erfolgt. Hieraus resultieren eine Zeitersparnis, eine Vereinfachung des Austausches einer defekten Steuerungseinheit, eine Vereinfachung des Austausches einer Konfiguration einer Steuerungseinheit und die Durchführbarkeit eines Austausches inklusive einer Übertragung einer Konfiguration ohne, dass hierfür Servicepersonal erforderlich wäre.

Das Verfahren kann fortgebildet werden, indem die Konfiguration Teile einer Betriebssoftware einer Steuerungseinheit umfasst. Ebenso vorteilhaft kann es sein, dass die Betriebssoftware vollständig ausgetauscht wird, also eine Konfiguration die vollständige Betriebssoftware einer Steuerungseinheit umfasst. Betriebssoftware ist heutzutage häufig modular aufgebaut und wird durch sogenannte "Updates" verbessert, indem beispielsweise Programmierfehler behoben werden oder eine Betriebssoftware in ihrem Funktionsumfang erweitert werden. So können beispielsweise Programmierfehler, die trotz intensiver Tests und Validierungen erst während des Betriebs einer Förderanlage erkannt werden, durch einen teilweisen Austausch einer Betriebssoftware behoben werden.

Ein Austausch eines Teils einer Betriebssoftware kann auch durch eine Modifikation der Förderanlage erforderlich werden, wenn zum Beispiel Einschleuser, Ausschleuser oder Hebevorrichtungen in eine bestehende Förderanlage integriert werden. Die Betriebssoftware wird dann durch Softwaremodule, Programmdateien oder Parameterdatensätze ergänzt, welche bestimmte Funktionen softwaretechnisch realisieren und das Steuerungsverfahren einer Fördervorrichtung den Erfordernissen entsprechend ändern oder erweitern. Durch den teilweisen Austausch einer Betriebssoftware bleiben bereits konfigurierte und voll funktionsfähige Teile der Betriebssoftware unangetastet, während neue Funktionalitäten ergänzt werden. Da heutzutage auf einer Vielzahl von Steuerungssystemen komplette Betriebssysteme, wie zum Beispiel Linux-Distributionen, eingesetzt werden, welche eine Vielzahl von betriebssystemspezifischen Softwarekomponenten aufweisen und nur eine begrenzte Anzahl von anwendungsbezogenen Softwarekomponenten aufweisen, ist auch hier ein Austausch von Teilen einer Betriebssoftware üblich.

Unter einem Teil einer Betriebssoftware soll weiterhin ein oder mehrere Datensätze mit Konfigurationsparametern für eine Fördervorrichtung verstanden werden. Weiterhin sind unter einem Teil einer Betriebssoftware auch Daten und Informationen zu verstehen, die während des Betriebs einer Fördervorrichtung ermittelt und abgespeichert worden sind. Beispiele hierfür sind Zählerstände, Informationen zu Wartungsarbeiten, im Betrieb aufgetretene Warnungen oder Fehlermeldungen.

Weiterhin ist es bevorzugt, dass die Konfiguration einen eindeutigen Versionsbezeichner umfasst, mittels dem die Aktualität der Konfiguration ermittelt werden kann, insbesondere einen eindeutigen Versionsbezeichner umfasst, der einer individuellen Firmwareversion oder Softwareversion der Betriebssoftware einer Steuerungseinheit zugeordnet ist.

Unter einem Versionsbezeichner soll ein Bezeichner verstanden werden, der es ermöglicht, zwei oder mehrere Konfigurationen voneinander zu unterscheiden oder deren Gleichheit festzustellen. Ein Versionsbezeichner kann dabei aus einer alphanummerischen Zeichenkette bestehen, wobei die Zeichenketten auch Sonderzeichen umfassen können. Insbesondere kann unter einem Versionsbezeichner eine Versionsnummer verstanden werden, wie sie beispielsweise aus der Softwareentwicklung zur Unterscheidung des Entwicklungsstands einer Software bekannt ist. Solch eine Versionsnummer ist üblicherweise in unterschiedliche Teile unterteilt und enthält beispielsweise eine Hauptversionsnummer, eine Revisionsnummer oder eine Buildnummer. Bei dem Versionsbezeichner kann es sich ebenso um ein Datum handeln, welches in einem der gängigen Datumsformate vorliegen kann.

Dass eine Konfiguration einen eindeutigen Versionsbezeichner aufweist, ist insbesondere deshalb vorteilhaft, da die Konfigurationen von Steuerungseinheiten fortwährend weiterentwickelt werden, wodurch sich deren Funktionsweise und -umfang verändern. Bisweilen sind dabei unterschiedliche Konfigurationen nicht kompatibel und führen zu fehlerhaften Funktionsweisen von Steuerungseinheiten. Um dies zu vermeiden, ist es erforderlich, den jeweiligen Entwicklungsstand einer Konfiguration nachverfolgen zu können, was mittels eines Versionsbezeichners ermöglicht wird. Durch die Kennzeichnung einer Konfiguration mit einem eindeutigen Versionsbezeichner, kann der jeweilige Entwicklungsstand einer Konfiguration einer Steuerungssoftware eindeutig bestimmt werden und darüber hinaus mit dem Entwicklungsstand einer Konfiguration einer anderen Steuerungseinheit verglichen werden. Mögliche Inkompatibilitäten einer Konfiguration mit Steuerungseinheiten oder Konfigurationen anderer Steuerungseinheiten können so frühzeitig erkannt werden.

Weiterhin ist es bevorzugt, dass der Schritt v) wie folgt ausgeführt wird:
v) Vergleich des Versionsbezeichners der Konfiguration der ersten Steuerungseinheit mit dem Versionsbezeichner der Konfiguration der dritten Steuerungseinheit, vorzugsweise in der ersten oder dritten Steuerungseinheit
vi) Falls der Versionsbezeichner der ersten Steuerungseinheit aktueller ist als der Versionsbezeichner der dritten Steuerungseinheit, dann Abspeichern, der von der ersten Steuerungseinheit übertragenen Konfiguration,
   oder
falls der Versionsbezeichner der ersten Steuerungseinheit aktueller ist als der Versionsbezeichner der dritten Steuerungseinheit, dann
a) Übertragen der Konfiguration der ersten Steuerungseinheit an die dritte Steuerungseinheit und
b) Abspeichern der übertragenen Konfiguration der ersten Steuerungseinheit in der dritten Steuerungseinheit.

Gemäß dieser Ausführungsform wird die neu in die Buskommunikation eingebundene dritte Steuerungseinheit dann mit der Konfiguration der ersten Steuerungseinheit versehen, wenn der Versionsbezeichner der Konfiguration der dritten Steuerungseinheit älter ist als der, der Konfiguration der ersten Steuerungseinheit. Somit erhält eine ausgetauschte Steuerungseinheit eine Konfiguration deren Versionsbezeichner mindestens dem der ersten Steuerungseinheit entspricht. Sofern die Konfiguration der dritten Steuerungseinheit aktueller ist, als die Konfiguration der ersten Steuerungseinheit, wird keine Konfiguration in der dritten Steuerungseinheit abgespeichert. Dabei kann die übertragene Konfiguration in einem speziellen Speicherbereich der dritten Steuerungseinheit abgespeichert werden oder die bestehende Konfiguration der dritten Steuerungseinheit überschreiben.

Der Vergleich der Versionsbezeichner der Konfigurationen erfolgt im dem vorgenannten Verfahren in der ersten oder dritten Steuerungseinheit. Ein Vergleich kann darüber hinaus auch durch eine zentrale Einheit erfolgen, wie beispielsweise einem Server oder einer speicherprogrammierbaren Steuerung. Durch die Übertragung und Abspeicherung können Inkompatibilitäten verschiedener Konfigurationen von Steuerungseinheiten ausgeschlossen werden und eine Kompatibilität zu der ersten, bereits in eine Förderanlage integrierte Steuerungseinheit, sichergestellt werden, da eine neu eingebundene Steuerungseinheit immer mindestens die Konfiguration der ersten Steuerungseinheit erhält. Weiterhin kann durch dieses Verfahren auch eine unkonfigurierte oder weitestgehend unkonfigurierte Steuerungseinheit mit einer Konfiguration versehen werden.

Durch dieses Verfahren kann daher der Austausch einer Steuerungseinheit erheblich vereinfacht werden, da die Konfiguration der neu eingebundenen Steuerungseinheit unerheblich ist und durch eine bereits in einer Steuerungseinheit existierenden Konfiguration erstellt wird. Hieran ist auch vorteilhaft, dass auf einen Eingriff eines Servicepersonals verzichtet werden kann und auch das Vorhalten von Konfigurationen entfallen kann, da diese stets aus einer bestehenden Anlage übertragen werden können.

Weiterhin ist es bevorzugt, dass der Schritt v) wie folgt ausgeführt wird:
v) Vergleich des Versionsbezeichners der Konfiguration der ersten Steuerungseinheit mit dem Versionsbezeichner der Konfiguration der dritten Steuerungseinheit, vorzugsweise in der ersten oder dritten Steuerungseinheit
vi) Falls der Versionsbezeichner der ersten Steuerungseinheit aktueller ist als der Versionsbezeichner der dritten Steuerungseinheit, dann

Abspeichern der von der ersten Steuerungseinheit an die dritte Steuerungseinheit übertragenen Konfiguration, sonst
a) Übertragen der Konfiguration der dritten Steuerungseinheit an die erste Steuerungseinheit und
b) Abspeichern der übertragenen Konfiguration der dritten Steuerungseinheit in der ersten Steuerungseinheit
   oder
falls der Versionsbezeichner der dritten Steuerungseinheit aktueller ist als der Versionsbezeichner der ersten Steuerungseinheit, dann Abspeichern der von der dritten Steuerungseinheit an die erste Steuerungseinheit übertragenen Konfiguration, sonst
a) Übertragen der Konfiguration der ersten Steuerungseinheit an die dritte Steuerungseinheit und
b) Abspeichern der übertragenen Konfiguration der ersten Steuerungseinheit in der dritten Steuerungseinheit.

Gemäß dieser Ausführungsform kann durch den Vergleich des Versionsbezeichners der Konfiguration der ersten Steuerungseinheit mit dem Versionsbezeichnen der Konfiguration der dritten Steuerungseinheit ermittelt werden, welche Konfiguration aktueller ist und die aktuellere Konfiguration auf die Steuerungseinheit mit der weniger aktuellen Konfiguration übertragen und in dieser abgespeichert werden.

Dabei kann die aktuellere Konfiguration in einem speziellen Speicherbereich einer Steuerungseinheit abgespeichert werden oder die weniger aktuelle Konfiguration einer Steuerungseinheit überschreiben.

Gemäß dieser Ausführungsform erfolgt somit stets eine Aktualisierung der ersten oder der dritten Steuerungseinheit auf die Konfiguration mit dem aktuellsten Versionsbezeichner. Hierzu wird die jeweils aktuellere Konfiguration über die Buskommunikation übertragen und in der Steuerungseinheit mit der weniger aktuellen Konfiguration abgespeichert. Hierdurch kann sichergestellt werden, dass beide Steuerungseinheiten mit einer einheitlichen und zudem der aktuellsten Konfiguration versehen werden.

Dies ist vorteilhaft, denn ein aufwendiges manuelles Ermitteln der Versionsbezeichner der Konfigurationen entfällt und auch der, sonst mit einer Vielzahl von Anwenderschritten durchzuführende Austausch einer Konfiguration, ist durch dieses Verfahren in erheblichem Maße vereinfacht. Insbesondere ist sichergestellt, dass die Steuerungseinheiten jeweils mit der aktuellsten Konfiguration betrieben werden wodurch wiederum Inkompatibilitäten und Fehler bei der Steuerung von Fördervorrichtungen vermieden werden.

Weiterhin ist es bevorzugt, dass der Schritt v) wie folgt ausgeführt wird:
v) Abfragen eines Zustands einer Konfigurationsrichtungs-Einstellung in der ersten oder dritten Steuerungseinheit durch die erste oder dritte Steuerungseinheit
vi) Falls die Konfigurationsrichtungs-Einstellung einen ersten Zustand aufweist,

Übertragen der Konfiguration der ersten Steuerungseinheit an die dritte Steuerungseinheit und Abspeichern der übertragenen Konfiguration in der dritten Steuerungseinheit, oder
falls die Konfigurationsrichtungs-Einstellung einen zweiten Zustand aufweist, Übertragen der Konfiguration der dritten Steuerungseinheit an die erste Steuerungseinheit und Abspeichern der übertragenen Konfiguration in der ersten Steuerungseinheit.

Unter einer Konfigurationsrichtungs-Einstellung ist eine Einstellung zu verstehen, die die Richtung (aktueller, weniger aktuell) festlegt, in die ein Versionsbezeichner einer Konfiguration geändert wird. Ein Vergleich von Versionsbezeichnern ist hierbei nicht erforderlich. Stattdessen wird festgelegt, ob die dritte Steuerungseinheit mit der Konfiguration der ersten Steuerungseinheit versehen wird oder die erste Steuerungseinheit mit der Konfiguration der dritten Steuerungseinheit versehen wird.

Weiterhin ist es bevorzugt, dass in einem nachgelagerten Verteilungsschritt, die in der ersten Steuerungseinheit abgespeicherte Konfiguration, von der ersten oder dritten Steuerungseinheit an eine Mehrzahl von Steuerungseinheiten übertragen und in dieser Mehrzahl von Steuerungseinheiten abgespeichert wird.

Unter einem Verteilungsschritt soll ein Übertragen von einer Konfiguration von der ersten oder dritten Steuerungseinheit an mindestens eine weitere Steuerungseinheit verstanden werden. Vorzugsweise erfolgt eine Verteilung an alle Steuerungseinheiten einer Förderanlage, die in die Buskommunikation eingebunden sind.

Außerdem kann es bevorzugt sein, dass die übertragene Konfiguration in den entsprechenden Steuerungseinheiten abgespeichert wird und vorzugsweise die darin vorhandene Konfiguration ersetzt. Durch diese Verteilung, der zuvor in der ersten oder dritten Steuerungseinheit abgespeicherten Konfiguration, können vollständige Förderanlagen oder aber auch nur Teilbereiche von Förderanlagen mit einer einheitlichen Konfiguration eingerichtet werden. Da es sich, wie vorhergehend beschrieben, bei der, in der ersten oder dritten Steuerungseinheit abgespeicherten Konfiguration, um eine Konfiguration mit einem aktuelleren Versionsbezeichner oder einem weniger aktuellen Versionsbezeichner handelt, ist es auf diese Art möglich, die Konfiguration von einer Vielzahl von Steuerungseinheiten in einer Förderanlage mit einer aktuelleren Konfiguration (Upgrade, Update), oder einer weniger aktuellen Konfiguration (Downgrade) einzurichten. Durch dieses Verfahren wird ein Aufspielen einer bestimmten Konfiguration auf weitere beziehungsweise alle Steuerungseinheiten einer Förderanlage vermieden und stattdessen ein vollautomatischer Austausch durchgeführt. Beispielsweise kann durch den Ersatz einer defekten Steuerungseinheit zugleich eine Aktualisierung oder ein Austausch der Konfiguration sämtlicher Steuerungseinheiten einer Förderanlage durchgeführt werden.

Ebenso ist es hierdurch möglich, dass eine Steuerungseinheit, welche bestimmte Hardwarefunktionen nicht unterstützt, aber dennoch in eine Förderanlage eingebunden werden soll, einen Downgrade der Konfigurationen aller Steuerungseinheiten einer Förderanlage initiiert und somit die Kompatibilität aller Konfigurationen aller Steuerungseinheiten sicherstellt.

Weiterhin ist es bevorzugt, dass der Schritt vi) wie folgt ausgeführt wird:
v) Vergleich des Versionsbezeichners der Konfiguration der erstenSteuerungseinheit mit dem Versionsbezeichner der Konfiguration der dritten Steuerungseinheit, vorzugsweise in der ersten oder dritten Steuerungseinheit
vi) Abfragen eines Zustands einer Konfigurationsrichtungs-Einstellung in der ersten oder dritten Steuerungseinheit durch die erste oder dritte Steuerungseinheit
vii) In Abhängigkeit des ermittelten Zustandes der Konfigurationsrichtungs-Einstellung, Ermitteln der Konfiguration mit dem aktuelleren Versionsbezeichner oder mit dem älteren Versionsbezeichner
viii) Falls die Konfiguration mit dem aktuelleren Versionsbezeichner nicht die Konfiguration der ersten oder dritten Steuerungseinheit ist,
   a) Übertragen der Konfiguration mit dem aktuelleren Versionsbezeichner von der ersten oder dritten Steuerungseinheit an die dritte oder erste Steuerungseinheit und
   b) Abspeichern der übertragenen Konfiguration der ersten oder dritten Steuerungseinheit in der dritten oder ersten Steuerungseinheit
   oder

Falls die Konfiguration mit dem älteren Versionsbezeichner nicht die Konfiguration der ersten oder dritten Steuerungseinheit ist,
a) Übertragen der Konfiguration mit dem älteren Versionsbezeichner von der ersten oder dritten Steuerungseinheit an die dritte oder erste Steuerungseinheit und
b) Abspeichern der übertragenen Konfiguration der ersten oder dritten Steuerungseinheit in der dritten oder ersten Steuerungseinheit.

Hierdurch wird ein Verfahren realisiert, bei dem in Abhängigkeit des ermittelten Zustandes der Konfigurationsrichtungs-Einstellung eine Übertragung einer Konfiguration mit einem aktuelleren Versionsbezeichner an eine Steuerungseinheit mit einer Konfiguration mit einem weniger aktuellen Versionsbezeichner erfolgt, diese dort abgespeichert wird oder eine Übertragung einer Konfiguration mit einem weniger aktuellen Versionsbezeichner an eine Steuerungseinheit mit einer Konfiguration mit einem aktuelleren Versionsbezeichner erfolgt.

Hierdurch lässt sich auswählen, ob die erste und dritte Steuerungseinheit einheitlich mit der aktuelleren oder der weniger aktuellen Konfiguration der ersten und dritten Steuerungseinheit eingerichtet wird. Einerseits kann eine Konfiguration durch eine Konfiguration mit einem aktuelleren Versionsbezeichner ersetzt werden (Upgrade). Andererseits ist es ebenso möglich, eine Konfiguration durch eine Konfiguration mit einem weniger aktuellen Versionsbezeichner zu ersetzen (Downgrade).

Weiterhin ist es bevorzugt, dass der Schritt vi) der vorangegangenen Ausführungsform wie folgt ausgeführt wird:
a) Abfragen eines Zustands einer Konfigurationsrichtungs-Einstellung in der ersten oder dritten Steuerungseinheit durch die erste oder dritte Steuerungseinheit
b) Signalisieren mittels einer optischen und/oder akustischen Signaleinheit durch die dritte oder erste Steuerungseinheit, ob der Versionsbezeichner der Konfiguration der dritten Steuerungseinheit einen aktuelleren oder einen älteren oder einen identischen Versionsbezeichner verglichen mit dem Versionsbezeichner der Konfiguration der ersten Steuerungseinheit aufweist
c) Ändern des Zustands der Konfigurationsrichtungs-Einstellung in der ersten oder dritten Steuerungseinheit durch einen Anwender
d) Abfragen eines Zustands einer Konfigurationsrichtungs-Einstellung in der ersten oder dritten Steuerungseinheit durch die erste oder dritte Steuerungseinheit

Hierdurch wird es ermöglicht, dass ein Anwender ohne vorherige Kenntnis des Versionsbezeichners der Konfiguration der dritten Steuerungseinheit Auskunft darüber erhält, ob die Konfiguration in der dritten Steuerungseinheit aktueller, älter, oder identisch der Konfiguration der ersten Steuerungseinheit ist. Dies ist vorteilhaft, da die Konfiguration einer Steuerungseinheit häufig nicht ohne Weiteres ermittelt werden kann oder unbekannt ist.

Eine Signalisierung des Vergleichs kann durch optische Ausgabeeinheiten, wie zum Beispiel durch eine oder mehrere LEDs oder Leuchten an oder in der dritten oder ersten Steuerungseinheit erfolgen. Vorzugsweise erfolgt die Ausgabe durch eine Segmentanzeige oder durch ein LC-Display in Form eines Symbols oder einer Klartextanzeige. Ebenso kann es bevorzugt sein, dass durch eine Abfolge von Tönen, die durch eine akustische Signaleinheit, wie zum Beispiel einen Piezo-Schallwandler oder einem Lautsprecher erzeugt werden, einem Anwender Auskunft über die Aktualität der Konfiguration der dritten Steuerungseinheit gegeben werden.

Weiterhin ist es bevorzugt, dass der Zustand der Konfigurationsrichtungs-Einstellung in der ersten oder dritten Steuerungseinheit
- durch Betätigen eines Kontakts, Schalters oder Sensors an und/oder in einer Steuerungseinheit geändert wird, und/oder
- durch eine zentrale Einheit mittels der Buskommunikation geändert wird.

Dies kann insofern vorteilhaft sein, als dass durch einen Anwender jederzeit der Zustand der Konfigurationsrichtungs-Einstellung geändert werden kann. Dies kann beispielsweise an einer Steuerungseinheit durch einen Schalter, wie zum Beispiel einem DIP-Schalter oder einem Stufenschalter erfolgen. Es ist auch möglich, dass diese Zustandsänderung durch einen Reed-Kontakt oder einen Hall-Sensor erfolgt oder durch einen optischen Sensor, zum Beispiel einem LDR oder einen Fototransistor. Insbesondere die magnetischen oder optischen Sensoren lassen sich vollständig durch eine Steuerungseinheit kapseln, wodurch die Sensoren gegen Einflüsse wie Staub oder Feuchtigkeit geschützt werden können. Mittels geeigneter Vorrichtungen, wie beispielsweise einem Schraubendreher, einem Magneten bzw. Elektromagneten oder einer Lichtquelle kann ein Anwender Kontakte, Schalter oder Sensoren betätigen.

Alternativ kann es vorteilhaft sein, dass der Zustand der Konfigurationsrichtungs-Einstellung durch eine zentrale Einheit geändert werden kann. Beispielsweise kann von eine Leitwarte aus der Zustand der Konfigurationsrichtungs-Einstellung in der ersten oder dritten Steuerungseinheit geändert werden. Hierdurch entfällt das physikalische Aufsuchen der betreffenden Steuerungseinheit.

Gemäß einem weiteren Aspekt der Erfindung wird die eingangsgenannte Aufgabe gelöst durch eine Vorrichtung, insbesondere einer Fördervorrichtung.

Die Umsetzung des Verfahrens erfolgt durch eine Fördervorrichtung, die eine erste Steuerungseinheit mit einer ersten Busadresse und mindestens eine zweite Steuerungseinheit mit einer zweiten Busadresse, umfasst, wobei die erste Steuerungseinheit ein erstes Fördersegment überwacht und steuert und die zweite Steuerungseinheit ein zweites Fördersegment überwacht und steuert, und die erste Steuerungseinheit und die zweite Steuerungseinheit mittels einer Buskommunikation verbunden sind, wobei
i) die erste Steuerungseinheit ausgebildet ist, um einen Defekt der zweiten Steuerungseinheit zu erkennen
ii) die erste Steuerungseinheit ausgebildet ist, um in einen Konfigurationsmodus zu wechseln, wenn die erste Steuerungseinheit den Defekt der zweiten Steuerungseinheit erkennt
iii) die erste Steuerungseinheit ausgebildet ist, um in einen Konfigurationsmodus versetzt zu werden
iv) die erste Steuerungseinheit ausgebildet ist, um in eine individuellen Busadresse aus der ersten Steuerungseinheit an die dritte Steuerungseinheit zu übertragen
v) die dritte Steuerungseinheit ausgebildet ist, um die von der ersten Steuerungseinheit übertragene individuelle Busadresse abzuspeichern.

Weiterhin kann die Fördervorrichtung fortgebildet werden, indem
- die zweite Steuerungseinheit ausgebildet ist, um ein Aktivitätssignal mittels der Buskommunikation zu senden,
- die erste Steuerungseinheit ausgebildet ist, um einen Defekt der zweiten Steuerungseinheit durch das Ausbleiben des Empfangs eines Aktivitätssignals der zweiten Steuerungseinheit zu erkennen,
- die erste Steuerungseinheit ausgebildet ist, um einen Defekt der zweiten Steuerungseinheit durch das Ausbleiben des Empfangs eines Aktivitätssignals innerhalb eines vorbestimmten Zeitintervalls nach Empfang eines vorhergehenden Aktivitätssignals zu erkennen.

Weiterhin kann die Fördervorrichtung fortgebildet werden, indem
die erste Steuerungseinheit ausgebildet ist, um durch das Ausbleiben des Empfangs des Aktivitätssignals in den Konfigurationsmodus versetzt zu werden.

Weiterhin kann die Fördervorrichtung fortgebildet werden, indem
die erste Steuerungseinheit ausgebildet ist, um bei Ausbleiben des Empfangs des Aktivitätssignals in der ersten Steuerungseinheit eine Fehlermeldung durch die erste Steuerungseinheit generiert wird und mittels der Buskommunikation übertragen wird.

Weiterhin kann die Fördervorrichtung fortgebildet werden, indem
- die dritte Steuerungseinheit ausgebildet ist, um ein Präsenzsignal auszusenden, nachdem sie in die Buskommunikation eingebunden wurde
- und die erste Steuerungseinheit ausgebildet ist, um durch den Empfang des Präsenzsignals von der dritten Steuerungseinheit in den Konfigurationsmodus versetzt wird.

Weiterhin kann die Fördervorrichtung fortgebildet werden, indem
das zweite Fördersegment ausgebildet ist, um die dritte Steuerungseinheit zu integrieren, wobei
- die zweite Steuerungseinheit aus dem zweiten Fördersegment entfernt wird oder
- die zweite Steuerungseinheit in dem zweiten Fördersegment verbleibt.

Weiterhin kann die Fördervorrichtung fortgebildet werden, indem
die dritte Steuerungseinheit ausgebildet ist, um die individuelle Busadresse im Schritt v) nur dann abzuspeichern, wenn die dritte Steuerungseinheit eine Nachricht der ersten Steuerungseinheit empfängt, die die erste Busadresse der ersten Steuerungseinheit und die zweite Busadresse, die der dritten Steuerungseinheit zugewiesen werden soll, enthält.

Weiterhin kann die Fördervorrichtung fortgebildet werden, indem
die Fördervorrichtung ein drittes Fördersegment und eine vierte Steuerungseinheit mit einer vierten Busadresse umfasst und die dritte Steuerungseinheit ausgebildet ist, um die individuelle Busadresse im Schritt v) nur dann abzuspeichern, wenn die dritte Steuerungseinheit zwei Nachrichten empfängt,
- wobei die erste Nachricht von der ersten Steuerungseinheit ausgesendet wurde und die erste Busadresse der ersten Steuerungseinheit enthält und die zweite Busadresse, die der dritten Steuerungseinheit zugewiesen werden soll, enthält
- und die zweite Nachricht von der vierten Steuerungseinheit ausgesendet wurde und die vierte Busadresse der vierten Steuerungseinheit enthält und die zweite Busadresse, die der dritten Steuerungseinheit zugewiesen werden soll, enthält
- und die zweite Busadresse, die der dritten Steuerungseinheit zugewiesen werden soll, in beiden Nachrichten identisch ist.

Weiterhin kann die Fördervorrichtung fortgebildet werden, indem
die erste Steuerungseinheit ausgebildet ist um, in einem vor dem Schritt i) ausgeführten Sicherungsschritt die zweite Busadresse der zweiten Steuerungseinheit abzuspeichern, und vorzugsweise die zweite Steuerungseinheit ausgebildet ist, um die erste Busadresse der ersten Steuerungseinheit abzuspeichern, und die dritte Steuerungseinheit ausgebildet ist, um mittels der abgespeicherten Busadresse der zweiten Steuerungseinheit konfiguriert zu werden, wobei
- die erste Steuerungseinheit ausgebildet ist, um die abgespeicherte zweite Busadresse der zweiten Steuerungseinheit auszusenden
- und die dritte Steuerungseinheit ausgebildet ist, um die empfangene zweite Busadresse der zweiten Steuerungseinheit abzuspeichern
- und die dritte Steuerungseinheit ausgebildet ist, um die Busadresse der ersten Steuerungseinheit abzuspeichern.

Weiterhin kann die Fördervorrichtung fortgebildet werden, indem
die ersten Steuerungseinheit ausgebildet ist, um in einem vorherigen Sicherungsschritt eine Konfiguration der zweiten Steuerungseinheit abzuspeichern und
die zweiten Steuerungseinheit ausgebildet ist, um in einem vorherigen Sicherungsschritt eine Konfiguration der ersten Steuerungseinheit abzuspeichern und
die dritte Steuerungseinheit ausgebildet ist, um mittels einer abgespeicherten Konfiguration der zweiten Steuerungseinheit konfiguriert zu werden.

Weiterhin kann die Fördervorrichtung fortgebildet werden, indem
eine Steuerungseinheit ausgebildet ist, um in einem vorherigen Sicherungsschritt die Busadresse, oder zusätzlich eine Konfiguration einer Steuerungseinheit eines nicht direkt benachbarten Fördersegment abzuspeichern und
die zweite Steuerungseinheit ausgebildet ist, um die Busadresse, oder zusätzlich eine Konfiguration, einer nicht direkt benachbarten Steuerungseinheit abzuspeichern.

Weiterhin kann die Fördervorrichtung fortgebildet werden, indem
eine Steuerungseinheit ausgebildet ist, um in einem vorherigen Sicherungsschritt die Busadresse, oder zusätzlich eine Konfiguration der zweiten Steuerungseinheit, in einer Mehrzahl von Steuerungseinheiten abzuspeichern und
die zweite Steuerungseinheit ausgebildet ist, um die Busadresse, oder zusätzlich eine Konfiguration, in einer Mehrzahl von Steuerungseinheiten abzuspeichern.

Weiterhin kann die Fördervorrichtung fortgebildet werden, indem
- eine Sicherungseinheit oder
- eine speicherprogrammierbaren Steuerung oder
- ein Web-Server ausgebildet ist,
um in einem vorherigen Sicherungsschritt die zweite Busadresse der zweiten Steuerungseinheit, oder zusätzlich die Konfiguration der zweiten Steuerungseinheit abzuspeichern, insbesondere dass sie ausgebildet sind, um die individuellen Busadressen, oder zusätzlich die Konfigurationen, aller in die Buskommunikation eingebundenen Steuerungseinheiten zentral abzuspeichern.

Weiterhin kann die Fördervorrichtung fortgebildet werden, indem die Konfiguration die vollständige Betriebssoftware einer Steuerungseinheit umfasst.

Zu der Funktionsweise, den Vorteilen und den Varianten der erfindungsgemäßen Fördervorrichtung und derer Fortbildungen wird auf die zu den Vorrichtungsmerkmalen korrespondierenden Verfahrensmerkmale und die zugehörigen voranstehenden Beschreibungsteile Bezug genommen.

Weiterhin kann die Fördervorrichtung fortgebildet werden, indem die Konfiguration Teile einer Betriebssoftware einer Steuerungseinheit umfasst.

Weiterhin kann die Fördervorrichtung fortgebildet werden, indem die Konfiguration einen eindeutigen Versionsbezeichner umfasst, mittels dem der Entwicklungsstand der Konfiguration ermittelt werden kann, insbesondere einen eindeutigen Versionsbezeichner umfasst, der einer individuellen Firmwareversion oder Softwareversion der Betriebssoftware einer Steuerungseinheit zugeordnet ist.

Weiterhin kann die Fördervorrichtung fortgebildet werden, indem die erste und/oder dritte Steuerungseinheit ausgebildet ist/sind, um den Versionsbezeichner der Konfiguration zu vergleichen.

Weiterhin kann die Fördervorrichtung fortgebildet werden, indem die erste und/oder dritte Steuerungseinheit ausgebildet ist/sind, um eine Zustand einer Konfigurationsrichtungs-Einstellung in der ersten oder dritten Steuerungseinheit auf einen ersten oder zweiten Zustand hin abzufragen.

Weiterhin kann die Fördervorrichtung fortgebildet werden, indem die erste und/oder dritte Steuerungseinheit ausgebildet ist/sind, um in einem Verteilungsschritt, die in der ersten Steuerungseinheit abgespeicherte Konfiguration an eine Mehrzahl von Steuerungseinheiten zu übertragen und diese Mehrzahl von Steuerungseinheiten ausgebildet sind, um die übertragene Konfiguration abzuspeichern.

Weiterhin kann die Fördervorrichtung fortgebildet werden, indem die erste und/oder dritte Steuerungseinheit ausgebildet ist/sind, um die Konfiguration mit dem aktuelleren Versionsbezeichner oder mit dem älteren Versionsbezeichner zu ermitteln.

Weiterhin kann die Fördervorrichtung fortgebildet werden, indem die erste und/oder dritte Steuerungseinheit ausgebildet ist/sind, um den Zustand der Konfigurationsrichtungs-Einstellung in der ersten oder dritten Steuerungseinheit
- durch Betätigen eines Kontakts, Schalters oder Sensors an und/oder in einer Steuerungseinheit zu ändern, und/oder
- durch eine zentrale Einheit mittels der Buskommunikation zu ändern.

Weiterhin kann die Fördervorrichtung fortgebildet werden, indem die erste und/oder dritte Steuerungseinheit ausgebildet ist/sind, um mittels einer optischen und/oder akustischen Signaleinheit zu signalisieren, ob der Versionsbezeichner der Konfiguration der dritten Steuerungseinheit einen aktuelleren oder einen älteren oder einen identischen Versionsbezeichner aufweist, verglichen mit dem Versionsbezeichner der Konfiguration der ersten Steuerungseinheit.

Eine bevorzugte Ausführungsform wird anhand der beiliegenden Figuren erläutert. Es zeigen
- Fig. 1a: eine schematische Darstellung einer Fördervorrichtung bestehend aus einem ersten und einem zweiten Fördersegment mit einer ersten und einer zweiten Steuerungseinheit
- Fig. 1b: eine schematische Darstellung einer Fördervorrichtung bestehend aus einer vier Fördersegmenten, die durch eine Steuerungseinheit überwacht und gesteuert werden
- Fig. 2: ein Ablaufdiagramm des erfindungsgemäßen Verfahrens zum Austausch einer Steuerungseinheit
- Fig. 3: ein beispielhaftes Ablaufdiagramm der Defekterkennung der ersten Steuerungseinheit
- Fig. 4: ein beispielhaftes Ablaufdiagramm der Konfiguration der dritten Steuerungseinheit

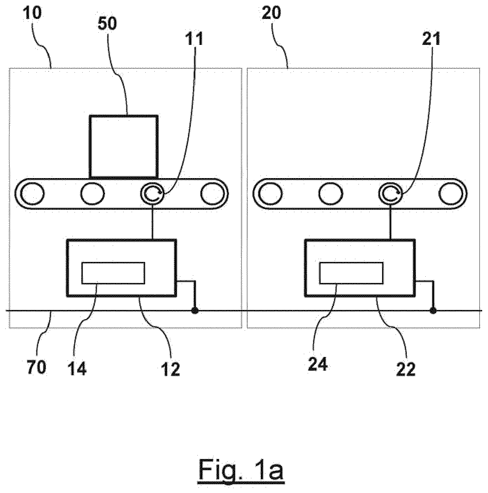

In Fig. 1a ist eine Fördervorrichtung dargestellt, welche sich aus zwei Fördersegmenten 10, 20 zusammensetzt. Jedes Fördersegment 10, 20 verfügt über eine motorisierte Förderrolle 11, 21, welche über Riemenantriebe die beidseits der motorisierten Förderrolle angeordneten Leerlaufrollen antreibt. Hierdurch kann ein Transportgut 50 über die Fördersegmente hinweg befördert werden, indem es auf den Leerlaufrollen und der motorisierten Förderroll aufliegt. Des Weiteren ist jedem Fördersegment 10, 20 eine Steuerungseinheit 12, 22 zugeordnet. Diese Steuerungseinheit 12, 22 steuert die motorisierte Förderrolle 11, 21 eines Fördersegments 10, 20. Eine Steuerungseinheit aktiviert oder deaktiviert die motorisierte Förderrolle oder kann die Drehrichtung der Förderrolle umkehren.

Weiterhin ist die Steuerungseinheit 12, 22 in eine Buskommunikation 70 eingebunden. Mittels der Buskommunikation 70 wird eine Datenübermittlung zwischen den Steuerungseinheiten 12 und 22 ermöglicht. Zur Adressierung ist jeder Steuerungseinheit eine individuelle Busadresse 14, 24 zugeordnet. Diese individuelle Busadresse 14, 24 ist in einem Informationsspeicher in der Steuerungseinheit 12, 22 abgespeichert.

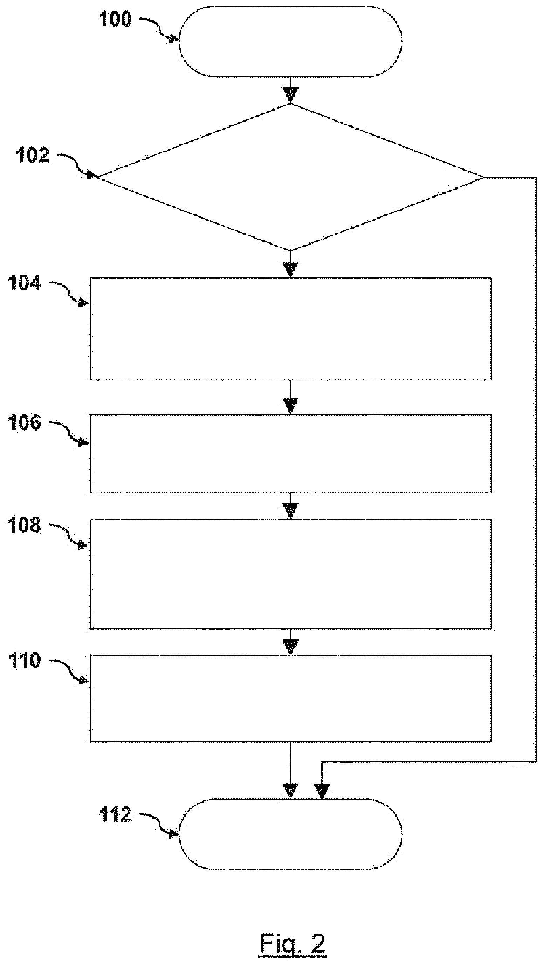

Fällt die zweite Steuerungseinheit 22 aufgrund eines Defektes aus, ist das erfindungsgemäße Verfahren zum Austauschen einer Steuerungseinheit vorteilhaft anzuwenden, dessen Ablaufplan in der Fig. 2 dargestellt ist.

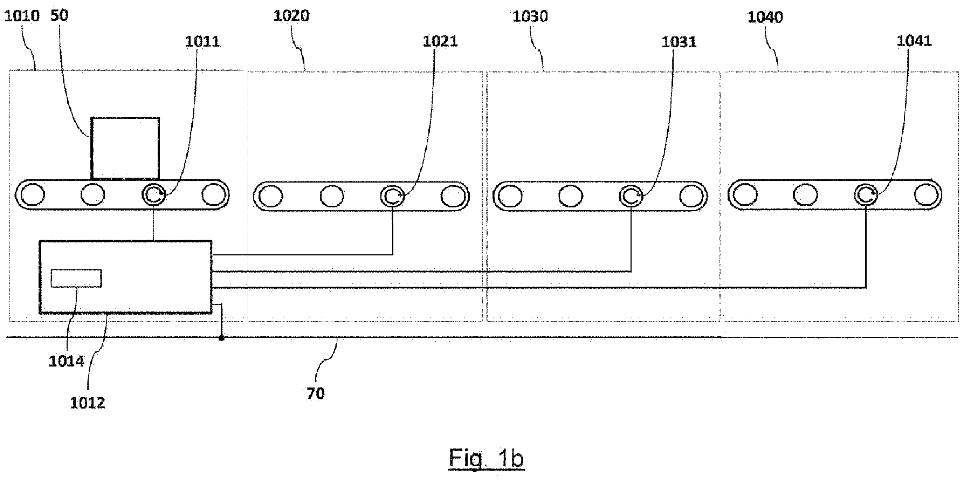

In Fig. 1b ist eine Fördervorrichtung dargestellt, welche eine weitere bevorzugte Ausführungsform darstellt, bei der vier Fördersegmente 1010, 1020, 1030 und 1040 durch eine Steuerungseinheit überwacht und gesteuert werden. Jedes Fördersegment 1010, 1020, 1030 und 1040 verfügt über eine motorisierte Förderrolle 1011, 1021, 1031 und 1041 die ein Transportgut 50 über die Fördersegmente hinweg befördern. Die vier Fördersegmente 1010, 1020, 1030 und 1040 werden hierbei durch eine Steuerungseinheit 1012 überwacht und gesteuert. Diese Steuerungseinheit 1012 steuert die motorisierten Förderrollen 1011, 1021, 1031, 1041 der Fördersegmente 1010, 1020, 1030 und 1040. Die Steuerungseinheit aktiviert oder deaktiviert die motorisierten Förderrollen oder kann die Drehrichtungen der Förderrollen umkehren.

Weiterhin ist die Steuerungseinheit 1012 in eine Buskommunikation 70 eingebunden. Mittels der Buskommunikation 70 wird eine Datenübermittlung zu weiteren Steuerungseinheiten (hier nicht dargestellt) ermöglicht. Zur Adressierung ist der Steuerungseinheit 1012 eine individuelle Busadresse 1014 zugeordnet. Diese individuelle Busadresse 1014 ist in einem Informationsspeicher in der Steuerungseinheit 1012 abgespeichert.

In Fig. 2 ist ein beispielhaftes Ablaufdiagramm des erfindungsgemäßen Verfahrens in Form des Ablaufdiagramms 100 dargestellt.

Das Verfahren beginnt mit dem Schritt 100 und wird gefolgt von dem Prüfschritt 102, in dem die erste Steuerungseinheit prüft, ob die zweite Steuerungseinheit defekt ist. Wird kein Defekt der zweiten Steuerungseinheit erkannt endet das Verfahren im Schritt 112. Wird ein Defekt der zweiten Steuerungseinheit erkannt, wird der Schritt 104 ausgeführt in dem die erste Steuerungseinheit in einen Konfigurationsmodus wechselt. In diesem Konfigurationsmodus wird in vorbestimmten Zeitintervallen eine individuelle Busadresse mittels der Buskommunikation ausgesendet. Im Folgenden Schritt 106 wird eine dritte Steuerungseinheit in die Buskommunikation eingebunden. Im folgenden Schritt 108 empfängt die dritte Steuerungseinheit die von der ersten Steuerungseinheit wiederholt ausgesendete individuelle Busdresse. Nach dem Empfang der individuellen Busadresse wird die individuelle Busadresse in der Steuerungseinheit im Schritt 110 abgespeichert und das Verfahren endet mit dem Schritt 112.

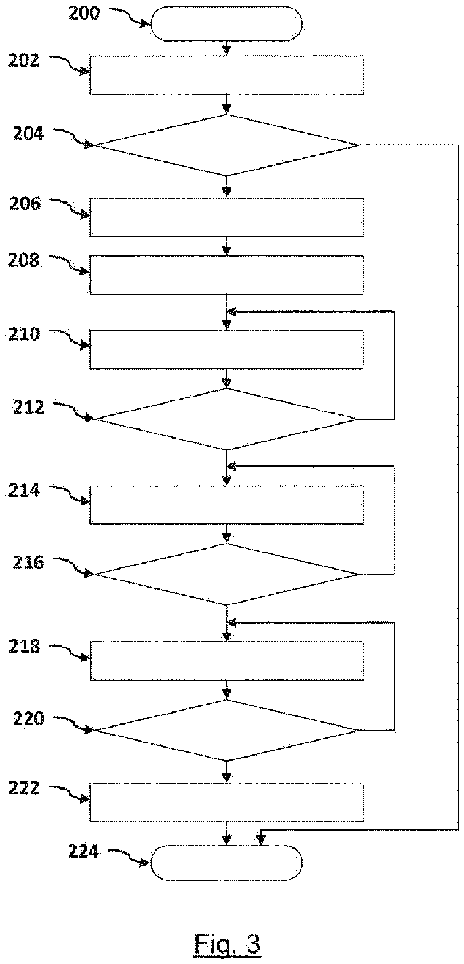

In Fig. 3 ist eine beispielhafte Ausführung des erfindungsgemäßen Verfahrens für die erste Steuerungseinheit dargestellt.

Nach dem Aufruf des Verfahrens im Schritt 200 sendet die erste Steuerungseinheit im Schritt 202 eine Aufforderung zur Aussendung eines Aktivitätssignals an die zweite Steuerungseinheit. Die erste Steuerungseinheit prüft den Empfang eines Aktivitätssignals 204 der zweiten Steuerungseinheit. Empfängt die erste Steuerungseinheit ein Aktivitätssignal von der zweiten Steuerungseinheit innerhalb eines ersten Zeitintervalls, endet das erfindungsgemäße Verfahren mit dem Schritt 220. Empfängt die erste Steuerungseinheit kein Aktivitätssignal der zweiten Steuerungseinheit innerhalb eines ersten Zeitintervalls, so wechselt die erste Steuerungseinheit in einen Konfigurationsmodus 206. In einem darauf folgenden Schritt 208 sendet die erste Steuerungseinheit eine Fehlermeldung mittels der Buskommunikation aus. Diese Fehlermeldung enthält vorzugsweise die Busadresse der als defekt erkannten zweiten Steuerungseinheit. Alle in die Buskommunikation eingebundenen Einheiten können diese Fehlermeldung empfangen und vordefinierte Aktionen durchführen. Im folgenden Schritt 210 sendet die erste Steuerungseinheit eine Konfigurationsnachricht aus, die die zweite Busadresse enthält. In einem Prüfschritt 212 wird der Empfang eines Quittungssignals der zweiten Steuerungseinheit über den Empfang der zweiten Busadresse geprüft. Empfängt die erste Steuerungseinheit in dem Prüfschritt 212 kein Quittungssignal, wird der Schritt 210 erneut durchgeführt. Empfängt die erste Steuerungseinheit im Prüfschritt 212 ein Quittungssignal der zweiten Steuerungseinheit, führt die erste Steuerungseinheit den Schritt 214 aus und sendet eine Konfigurationsnachricht mit einer Konfiguration der zweiten Steuerungseinheit. In einem Prüfschritt 216 prüft die erste Steuerungseinheit ob ein Quittungssignal für eine erfolgreiche Konfiguration der zweiten Steuerungseinheit empfangen wurde. Empfängt die erste Steuerungseinheit dieses Quittungssignal nicht innerhalb eines zweiten Zeitintervalls, so wird der Schritt 214 erneut ausgeführt. Empfängt die erste Steuerungseinheit ein Quittungssignal innerhalb eines zweiten Zeitintervalls, so wird der Konfigurationsmodus im Schritt 218 verlassen und das Verfahren mit dem Schritt 220 beendet.

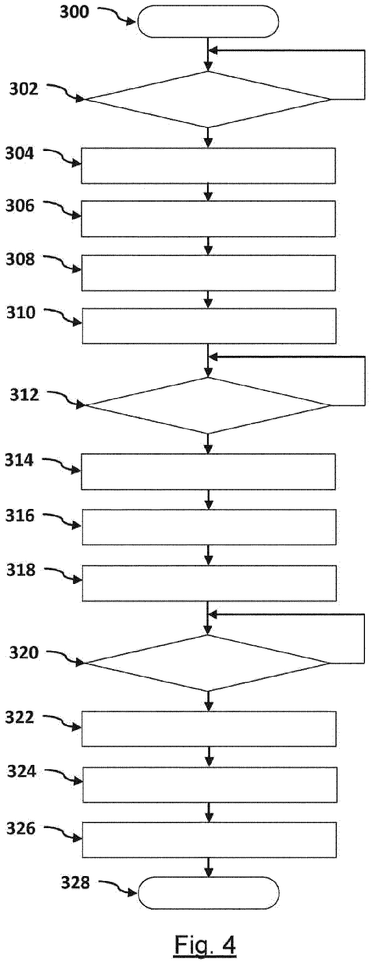

In Fig. 4 ist ein beispielhafter Ablauf der Konfiguration der dritten Steuerungseinheit dargestellt.

Nachdem die dritte Steuerungseinheit in die Buskommunikation eingebundenen wurde, startet das Verfahren im Schritt 300. Die dritte Steuerungseinheit geht dann über in einen Prüfschritt 302, in dem die dritte Steuerungseinheit auf den Empfang einer Busadresse, vorzugsweise als Inhalt einer Konfigurationsnachricht, wartet. Empfängt die dritte Steuerungseinheit keine Busadresse innerhalb eines dritten Zeitintervalls, so wird der Prüfschritt 302 wiederholt ausgeführt. Empfängt die dritte Steuerungseinheit im Prüfschritt 302 eine Busadresse, so wird diese Busadresse im Schritt 304 abgespeichert. Im darauf folgenden Schritt 306 wird die abgespeicherte Busadresse angewendet. Vorzugsweise wird die abgespeicherte Busadresse im laufenden Betrieb der Steuerungseinheit übernommen, vorzugsweise ohne die Steuerungseinheit neu zu starten. Im folgenden Schritt 308 speichert die dritte Steuerungseinheit die Busadresse der ersten Steuerungseinheit, die vorzugsweise als Teil der Konfigurationsnachricht an die dritte Steuerungseinheit übertragen wurde. Im Schritt 310 sendet die dritte Steuerungseinheit ein Quittungssignal an die erste Steuerungseinheit, zur Bestätigung des Empfangs der Busadresse. In dem darauf folgenden Prüfschritt 312 wartet die dritte Steuerungseinheit auf den Empfang einer Konfiguration. Empfängt die dritte Steuerungseinheit keine Konfiguration innerhalb eines dritten Zeitintervalls, so wird der Schritt 312 wiederholt ausgeführt. Empfängt die dritte Steuerungseinheit eine Konfiguration innerhalb eines dritten Zeitintervalls, so wird der Schritt 314 ausgeführt, und die empfangene Konfiguration wird abgespeichert. Im darauf folgenden Schritt 316 wird die abgespeicherte Konfiguration innerhalb der dritten Steuerungseinheit angewendet. Dies erfolgt vorzugsweise im laufenden Betrieb der dritten Steuerungseinheit und erfordert vorzugsweise keinen Neustart der dritten Steuerungseinheit. Im Schritt 318 wird anschließend ein Quittungssignal an die erste Steuerungseinheit gesendet, wodurch der ersten Steuerungseinheit der Empfang einer Konfiguration in der dritten Steuerungseinheit quittiert wird. Im darauf folgenden Prüfschritt 320 prüft die dritte Steuerungseinheit, ob die erste Steuerungseinheit die Konfiguration der ersten Steuerungseinheit aussendet. Empfängt die dritte Steuerungseinheit die Konfiguration der ersten Steuerungseinheit nicht innerhalb eines vierten Zeitintervalls, so wird der Schritt 320 wiederholt ausgeführt. Empfängt die dritte Steuerungseinheit eine Konfiguration der ersten Steuerungseinheit innerhalb eines vierten Zeitintervalls, wird der Schritt 322 ausgeführt, in dem die empfangene Konfiguration der ersten Steuerungseinheit in der dritten Steuerungseinheit abgespeichert wird. Im darauf folgenden Schritt 324 sendet die dritte Steuerungseinheit ein Quittungssignal an die erste Steuerungseinheit zur Bestätigung des Empfangs der Konfiguration der ersten Steuerungseinheit. Im darauf folgenden Schritt 326 beendet die dritte Steuerungseinheit den Konfigurationsmodus und wechselt in den Schritt 328, in dem das erfindungsgemäße Verfahren beendet wird.

## Patentansprüche

1. Verfahren zum Ersetzen einer defekten Steuerungseinheit in einer bus-vernetzten Fördervorrichtung, wobei die Fördervorrichtung eine erste Steuerungseinheit mit einer ersten Busadresse und mindestens eine zweite Steuerungseinheit mit einer zweiten Busadresse, umfasst,
wobei die erste Steuerungseinheit ein erstes Fördersegment steuert und die zweite Steuerungseinheit ein zweites Fördersegment steuert,
und die erste Steuerungseinheit und die zweite Steuerungseinheit mittels einer Buskommunikation verbunden sind,
**dadurch gekennzeichnet, dass** folgende Schritte ausgeführt werden:
i) Erkennung des Defekts der zweiten Steuerungseinheit durch die erste Steuerungseinheit
ii) Wechsel der ersten Steuerungseinheit in einen Konfigurationsmodus, wenn die erste Steuerungseinheit den Defekt der zweiten Steuerungseinheit erkennt
iii) Einbinden einer dritten Steuerungseinheit in die Buskommunikation, nachdem die erste Steuerungseinheit in den Konfigurationsmodus versetzt ist
iv) Übertragen einer Konfiguration aus der ersten Steuerungseinheit an die dritte Steuerungseinheit oder aus der dritten Steuerungseinheit an die erste Steuerungseinheit
v) Abspeichern der von der ersten Steuerungseinheit übertragenen Konfiguration in der dritten Steuerungseinheit oder abspeichern der von der dritten Steuerungseinheit übertragenen Konfiguration in der ersten Steuerungseinheit.

2. Verfahren nach Anspruch 1 **dadurch gekennzeichnet, dass** die Schritte iv) und v) durch die Schritte
iv) Übertragen einer individuellen Busadresse aus der ersten Steuerungseinheit an die dritte Steuerungseinheit
v) Abspeichern der von der ersten Steuerungseinheit übertragenen individuellen Busadresse in der dritten Steuerungseinheit
ersetzt werden.

3. Verfahren nach Anspruch 1 oder 2 **dadurch gekennzeichnet, dass**
die zweite Steuerungseinheit ein Aktivitätssignal über die Busleitungen sendet und die erste Steuerungseinheit das Aktivitätssignal der zweiten Steuerungseinheit empfängt und die Erkennung des Defekts der zweiten Steuerungseinheit in Schritt i) durch das Ausbleiben des Empfangs des Aktivitätssignals der zweiten Steuerungseinheit in der ersten Steuerungseinheit erfolgt, insbesondere dass die zweite Steuerungseinheit in regelmäßigen vorbestimmten Zeitintervallen ein Aktivitätssignal sendet und die Erkennung einer defekten Steuerungseinheit durch das Ausbleiben des Empfangs des Aktivitätssignals innerhalb des vorbestimmten Zeitintervalls nach Empfang eines vorhergehenden Aktivitätssignals erfolgt,wobei vorzugsweise die erste Steuerungseinheit durch das Ausbleiben des Empfangs des Aktivitätssignals in den Konfigurationsmodus versetzt wird, und/oder
bei Ausbleiben des Empfangs des Aktivitätssignals in der ersten Steuerungseinheit eine Fehlermeldung durch die erste Steuerungseinheit generiert wird und mittels der Buskommunikation übertragen wird.

4. Verfahren nach einem der vorherigen Ansprüche 2 oder 3 , **dadurch gekennzeichnet, dass**
die dritte Steuerungseinheit ein Präsenzsignal aussendet, nachdem sie in die Buskommunikation eingebunden wurde, und die erste Steuerungseinheit durch den Empfang des Präsenzsignals von der dritten Steuerungseinheit in den Konfigurationsmodus versetzt wird.

5. Verfahren nach einem der vorherigen Ansprüche 2-4 , **dadurch gekennzeichnet, dass**
die dritte Steuerungseinheit integriert wird, wobei
- die zweite Steuerungseinheit entfernt wird oder
- die zweite Steuerungseinheit verbleibt.

6. Verfahren nach einem der vorherigen Ansprüche 2-5, **dadurch gekennzeichnet, dass** im Schritt v)
die dritte Steuerungseinheit eine zweite Busadresse nur dann abspeichert, wenn die dritte Steuerungseinheit eine Nachricht der ersten Steuerungseinheit empfängt, die die erste Busadresse der ersten Steuerungseinheit und eine individuelle Busadresse, die der dritten Steuerungseinheit zugewiesen werden soll, enthält.

7. Verfahren nach einem der vorherigen Ansprüche 2-6, **dadurch gekennzeichnet, dass** ein drittes Fördersegment eine vierte Steuerungseinheit mit einer vierten Busadresse umfasst und die dritte Steuerungseinheit die individuelle Busadresse im Schritt v) nur dann abspeichert, wenn die dritte Steuerungseinheit zwei Nachrichten empfängt,
- wobei die erste Nachricht von der ersten Steuerungseinheit ausgesendet wurde und die erste Busadresse der ersten Steuerungseinheit enthält und die Busadresse, die der dritten Steuerungseinheit zugewiesen werden soll, enthält
- und die zweite Nachricht von der vierten Steuerungseinheit ausgesendet wurde und die vierte Busadresse der vierten Steuerungseinheit enthält und die Busadresse, die der dritten Steuerungseinheit zugewiesen werden soll, enthält
- und die individuelle Busadresse, die der dritten Steuerungseinheit zugewiesen werden soll, in beiden Nachrichten identisch ist.

8. Verfahren nach einem der vorherigen Ansprüche 2-7, **dadurch gekennzeichnet, dass**
in einem vorherigen Sicherungsschritt die zweite Busadresse der zweiten Steuerungseinheit in der ersten Steuerungseinheit abgespeichert wurde und vorzugsweise die erste Busadresse der ersten Steuerungseinheit in der zweiten Steuerungseinheit abgespeichert wurde,
und die dritte Steuerungseinheit mittels der abgespeicherten Busadresse der zweiten Steuerungseinheit konfiguriert wird mit den Schritten:
a) Aussenden der abgespeicherten zweiten Busadresse der zweiten Steuerungseinheit und empfangen durch die dritte Steuerungseinheit
b) Abspeichern der durch die dritte Steuerungseinheit empfangenen zweiten Busadresse der zweiten Steuerungseinheit in der dritten Steuerungseinheit
c) Abspeichern der ersten Busadresse der ersten Steuerungseinheit in der dritten Steuerungseinheit, wobei vorzugsweise
- in einem vorherigen Sicherungsschritt eine Konfiguration der zweiten Steuerungseinheit in der ersten Steuerungseinheit abgespeichert wurde und vorzugsweise eine Konfiguration der ersten Steuerungseinheit in der zweiten Steuerungseinheit abgespeichert wurde, und die dritte Steuerungseinheit mittels der in der ersten Steuerungseinheit abgespeicherten Konfiguration der zweiten Steuerungseinheit konfiguriert wird, und/oder
- in einem vorherigen Sicherungsschritt die Busadresse, oder zusätzlich die Konfiguration der zweiten Steuerungseinheit, in einer Steuerungseinheit eines nicht direkt benachbarten Fördersegments abgespeichert wurde und vorzugsweise die Busadresse, oder zusätzlich die Konfiguration, der nicht direkt benachbarten Steuerungseinheit, in der zweiten Steuerungseinheit abgespeichert wurde, und/oder
- in einem vorherigen Sicherungsschritt die Busadresse, oder zusätzlich die Konfiguration der zweiten Steuerungseinheit, in einer Mehrzahl von Steuerungseinheiten abgespeichert wurde und vorzugsweise die Busadressen, oder zusätzlich die Konfigurationen, der Mehrzahl von Steuerungseinheiten, in der zweiten Steuerungseinheit abgespeichert wurden.

9. Verfahren nach den Ansprüchen 2-8, **dadurch gekennzeichnet, dass**
in einem vorherigen Sicherungsschritt die zweite Busadresse der zweiten Steuerungseinheit, oder zusätzlich die Konfiguration der zweiten Steuerungseinheit
- in einer Sicherungseinheit abgespeichert wurde oder
- in einer speicherprogrammierbaren Steuerung abgespeichert wurde oder
- in einem Web-Server abgespeichert wurde,
insbesondere dass die individuellen Busadressen, oder zusätzlich die Konfigurationen, aller in die Buskommunikation eingebundenen Steuerungseinheiten zentral in einer Einheit abgespeichert wurden.

10. Verfahren nach den Ansprüchen 1-9, **dadurch gekennzeichnet, dass**
- die Konfiguration die vollständige Betriebssoftware einer Steuerungseinheit umfasst, oder
die Konfiguration einen Teil oder mehrere Teile einer Betriebssoftware einer Steuerungseinheit umfasst,
- wobei vorzugsweise die Konfiguration einen eindeutigen Versionsbezeichner umfasst, mittels dem die Aktualität der Konfiguration ermittelt werden kann, insbesondere einen eindeutigen Versionsbezeichner umfasst, der einer individuellen Firmwareversion oder Softwareversion der Betriebssoftware einer Steuerungseinheit zugeordnet ist,
und weiter vorzugsweise der Schritt v) wie folgt ausgeführt wird:
v) Vergleich des Versionsbezeichners der Konfiguration der ersten Steuerungseinheit mit dem Versionsbezeichner der Konfiguration der dritten Steuerungseinheit, vorzugsweise in der ersten oder dritten Steuerungseinheit
vi) Falls der Versionsbezeichner der ersten Steuerungseinheit aktueller ist als der Versionsbezeichner der dritten Steuerungseinheit, dann Abspeichern, der von der ersten Steuerungseinheit übertragenen Konfiguration,
oder
falls der Versionsbezeichner der ersten Steuerungseinheit aktueller ist als der Versionsbezeichner der dritten Steuerungseinheit, dann
a) Übertragen der Konfiguration der ersten Steuerungseinheit an die dritte Steuerungseinheit und
b) Abspeichern der übertragenen Konfiguration der ersten Steuerungseinheit in der dritten Steuerungseinheit,
oder der Schritt v) wie folgt ausgeführt wird:
v) Vergleich des Versionsbezeichners der Konfiguration der ersten Steuerungseinheit mit dem Versionsbezeichner der Konfiguration der dritten Steuerungseinheit, vorzugsweise in der ersten oder dritten Steuerungseinheit
vi) Falls der Versionsbezeichner der ersten Steuerungseinheit aktueller ist als der Versionsbezeichner der dritten Steuerungseinheit, dann Abspeichern der von der ersten Steuerungseinheit an die dritte Steuerungseinheit übertragenen Konfiguration, sonst
a) Übertragen der Konfiguration der dritten Steuerungseinheit an die erste Steuerungseinheit und
b) Abspeichern der übertragenen Konfiguration der dritten Steuerungseinheit in der ersten Steuerungseinheit
oder falls der Versionsbezeichner der dritten Steuerungseinheit aktueller ist als der Versionsbezeichner der ersten Steuerungseinheit, dann
Abspeichern der von der dritten Steuerungseinheit an die erste Steuerungseinheit übertragenen Konfiguration, sonst
a) Übertragen der Konfiguration der ersten Steuerungseinheit an die dritte Steuerungseinheit und
b) Abspeichern der übertragenen Konfiguration der ersten Steuerungseinheit in der dritten Steuerungseinheit, oder
der Schritt v) wie folgt ausgeführt wird:
v) Vergleich des Versionsbezeichners der Konfiguration der ersten Steuerungseinheit mit dem Versionsbezeichner der Konfiguration der dritten Steuerungseinheit, vorzugsweise in der ersten oder dritten Steuerungseinheit
vi) Abfragen eines Zustands einer Konfigurationsrichtungs-Einstellung in der ersten oder dritten Steuerungseinheit durch die erste oder dritte Steuerungseinheit
vii) In Abhängigkeit des ermittelten Zustandes einer Konfigurationsrichtungs-Einstellung, Ermitteln der Konfiguration mit dem aktuelleren Versionsbezeichner oder mit dem älteren Versionsbezeichner
viii) Falls die Konfiguration mit dem aktuelleren Versionsbezeichner nicht die Konfiguration der ersten oder dritten Steuerungseinheit ist,
a) Übertragen der Konfiguration mit dem aktuelleren Versionsbezeichner von der ersten oder dritten Steuerungseinheit an die dritte oder erste Steuerungseinheit und
b) Abspeichern der übertragenen Konfiguration der ersten oder dritten Steuerungseinheit in der dritten oder ersten Steuerungseinheit
oder
Falls die Konfiguration mit dem älteren Versionsbezeichner nicht die Konfiguration der ersten oder dritten Steuerungseinheit ist,
a) Übertragen der Konfiguration mit dem älteren Versionsbezeichner von der ersten oder dritten Steuerungseinheit an die dritte oder erste Steuerungseinheit und
b) Abspeichern der übertragenen Konfiguration der ersten oder dritten Steuerungseinheit in der dritten oder ersten Steuerungseinheit.

11. Verfahren nach Anspruch 1, **dadurch gekennzeichnet, dass** die Schritte iv) und v) wie folgt ausgeführt werden:
iv) Abfragen eines Zustands einer Konfigurationsrichtungs-Einstellung in der ersten oder dritten Steuerungseinheit durch die erste oder dritte Steuerungseinheit
v) Falls die Konfigurationsrichtungs-Einstellung einen ersten Zustand aufweist, Übertragen der Konfiguration der ersten Steuerungseinheit an die dritte Steuerungseinheit und Abspeichern der übertragenen Konfiguration in der dritten Steuerungseinheit, oder
falls die Konfigurationsrichtungs-Einstellung einen zweiten Zustand aufweist, Übertragen der Konfiguration der dritten Steuerungseinheit an die erste Steuerungseinheit und Abspeichern der übertragenen Konfiguration in der ersten Steuerungseinheit.

12. Fördervorrichtung, umfassend eine erste Steuerungseinheit mit einer ersten Busadresse und mindestens eine zweite Steuerungseinheit mit einer zweiten Busadresse, wobei die erste Steuerungseinheit ein erstes Fördersegment überwacht und steuert und die zweite Steuerungseinheit ein zweites Fördersegment überwacht und steuert, und die erste Steuerungseinheit und die zweite Steuerungseinheit mittels einer Buskommunikation verbunden sind,
**dadurch gekennzeichnet, dass**
i) die erste Steuerungseinheit ausgebildet ist, um einen Defekt der zweiten Steuerungseinheit zu erkennen
ii) die erste Steuerungseinheit ausgebildet ist, um in einen Konfigurationsmodus zu wechseln, wenn die erste Steuerungseinheit den Defekt der zweiten Steuerungseinheit erkennt
iii) die erste Steuerungseinheit ausgebildet ist, um in einen Konfigurationsmodus versetzt zu werden
iv) die erste Steuerungseinheit ausgebildet ist, um eine Konfiguration aus der ersten Steuerungseinheit an die dritte Steuerungseinheit zu übertragen und die dritte Steuerungseinheit ausgebildet ist, um eine Konfiguration an die erste Steuerungseinheit zu übertragen
v) die dritte Steuerungseinheit ausgebildet ist, um die von der ersten Steuerungseinheit übertragene Konfiguration abzuspeichern und die erste Steuerungseinheit ausgebildet ist, um die von der dritten Steuerungseinheit übertragene Konfiguration abzuspeichern.

13. Fördervorrichtung nach Anspruch 12, **dadurch gekennzeichnet, dass** die Merkmale iv) und v) wie folgt ausgebildet sind:
iv) die erste Steuerungseinheit ausgebildet ist, um eine individuelle Busadresse aus der ersten Steuerungseinheit an die dritte Steuerungseinheit zu übertragen
v) die dritte Steuerungseinheit ausgebildet ist, um die von der ersten Steuerungseinheit übertragene individuelle Busadresse abzuspeichern.

14. Fördervorrichtung nach Anspruch 13, **dadurch gekennzeichnet, dass**
- die zweite Steuerungseinheit ausgebildet ist, um ein Aktivitätssignal mittels der Buskommunikation auszusenden,
- die erste Steuerungseinheit ausgebildet ist, um einen Defekt der zweiten Steuerungseinheit durch das Ausbleiben des Empfangs eines Aktivitätssignals der zweiten Steuerungseinheit zu erkennen,
- die erste Steuerungseinheit ausgebildet ist, um einen Defekt der zweiten Steuerungseinheit durch das Ausbleiben des Empfangs eines Aktivitätssignals innerhalb eines vorbestimmten Zeitintervalls nach Empfang eines vorhergehenden Aktivitätssignals zu erkennen.

15. Fördervorrichtung nach Anspruch 13-14, **dadurch gekennzeichnet, dass**
die erste Steuerungseinheit ausgebildet ist, um durch das Ausbleiben des Empfangs des Aktivitätssignals in den Konfigurationsmodus versetzt zu werden, und/oder.
die erste Steuerungseinheit ausgebildet ist, um bei Ausbleiben des Empfangs des Aktivitätssignals in der ersten Steuerungseinheit eine Fehlermeldung durch die erste Steuerungseinheit generiert wird und mittels der Buskommunikation übertragen wird.

## Claims

1. Method for replacing a defective control unit in a bus-networked conveying device, wherein the conveying device comprises a first control unit with a first bus address and at least one second control unit with a second bus address,
wherein the first control unit controls a first conveyor segment, and the second control unit controls a second conveyor segment,
and the first control unit and the second control unit are linked by means of bus communication,
**characterized in that** the following steps are carried out:
i) the defect in the second control unit is detected by the first control unit;
ii) the first control unit is switched into a configuration mode when the first control unit detects the defect in the second control unit;
iii) a third control unit is integrated into the bus communication after the first control unit has been put into the configuration mode;
iv) a configuration is transferred from the first control unit to the third control unit or from the third control unit to the first control unit;
v) the configuration that has been transferred from the first control unit is stored in the third control unit, or the configuration that has been transferred from the third control unit is stored in the first control unit.

2. Method according to Claim 1, **characterized in that** steps iv) and v) are replaced by the steps
iv) an individual bus address is transferred from the first control unit to the third control unit;
v) the individual bus address that has been transferred from the first control unit is stored in the third control unit.

3. Method according to Claim 1 or 2, **characterized in that**
the second control unit sends an activity signal via the bus lines, and the first control unit receives the activity signal from the second control unit, and the detection of the defect in the second control unit occurs in step i) as a result of the failure of the first control unit to receive the activity signal from the second control unit, in particular **in that** the second control unit transmits an activity signal at regular, predetermined intervals, and the detection of a defective control unit occurs as a result of the failure to receive the activity signal within the predetermined interval after the receipt of a preceding activity signal, wherein the first control unit is preferably put into the configuration mode by the failure to receive the activity signal, and/or
an error message is generated by the first control unit and is transmitted by means of bus communication if the activity signal is not received by the first control unit.

4. Method according to one of the preceding Claims 2 or 3, **characterized in that**
the third control unit transmits a presence signal once it has been integrated into the bus communication, and the first control unit is put into the configuration mode by the receipt of the presence signal from the third control unit.

5. Method according to one of the preceding Claims 2 to 4, **characterized in that**
the third control unit is integrated, wherein
- the second control unit is removed, or
- the second control unit remains.

6. Method according to one of the preceding Claims 2 to 5, **characterized in that** in step v)
the third control unit stores a second bus address only if the third control unit receives from the first control unit a message containing the first bus address of the first control unit and an individual bus address, which is to be allocated to the third control unit.

7. Method according to one of the preceding Claims 2 to 6, **characterized in that**
a third conveyor segment comprises a fourth control unit with a fourth bus address, and the third control unit stores the individual bus address in step v) only if the third control unit receives two messages,
- wherein the first message has been sent from the first control unit and contains the first bus address of the first control unit and the bus address that is to be allocated to the third control unit,
- and the second message has been sent from the fourth control unit and contains the fourth bus address of the fourth control unit and the bus address that is to be allocated to the third control unit,
- and the individual bus address that is to be allocated to the third control unit is identical in both messages.

8. Method according to one of the preceding Claims 2 to 7, **characterized in that**,
in a previous backup step, the second bus address of the second control unit has been stored in the first control unit, and the first bus address of the first control unit has preferably been stored in the second control unit,
and the third control unit is configured by means of the stored bus address from the second control unit with the steps:
a) the stored second bus address of the second control unit is transmitted, and it is received by the third control unit;
b) the second bus address of the second control unit, which has been received by the third control unit, is stored in the third control unit;
c) the first bus address of the first control unit is stored in the third control unit, wherein preferably
- in a previous backup step, a configuration of the second control unit has been stored in the first control unit, and preferably a configuration of the first control unit has been stored in the second control unit, and the third control unit is configured by means of the configuration of the second control unit that is stored in the first control unit, and/or
- in a previous backup step, the bus address, alone or in combination with the configuration of the second control unit, has been stored in a control unit of a conveyor segment that is not immediately adjacent, and preferably the bus address, alone or in combination with the configuration of the not immediately adjacent control unit, has been stored in the second control unit, and/or
- in a previous backup step, the bus address, either alone or in combination with the configuration of the second control unit, has been stored in a plurality of control units, and preferably the bus addresses, either alone or in combination with the configurations of the plurality of control units, have been stored in the second control unit.

9. Method according to Claims 2 to 8, **characterized in that**
in a previous backup step, the second bus address of the second control unit, either alone or in combination with the configuration of the second control unit,
- has been stored in a backup unit, or
- has been stored in a programmable logic controller, or
- has been stored on a web server,
in particular **in that** the individual bus addresses, either alone or in combination with the configurations of all of the control units that are integrated into the bus communication, have been centrally stored in one unit.

10. Method according to Claims 1 to 9, **characterized in that**
- the configuration includes the full operating software of a control unit, or
the configuration includes one or more elements of an operating software of a control unit,
- wherein the configuration preferably includes a unique version identifier, by means of which it is possible to determine how current the configuration is, in particular including a unique version identifier, which is allocated to an individual firmware version or software version of the operating software of a control unit,
and further preferably, step v) is carried out as follows:
v) the version identifier of the configuration of the first control unit is compared with the version identifier of the configuration of the third control unit, preferably in the first or the third control unit;
vi) if the version identifier of the first control unit is more current than the version identifier of the third control unit, then the configuration that has been transferred from the first control unit is stored;
or
if the version identifier of the first control unit is more current than the version identifier of the third control unit, then
a) the configuration of the first control unit is transferred to the third control unit; and
b) the transferred configuration of the first control unit is stored in the third control unit;
or step v) is carried out as follows:
v) the version identifier of the configuration of the first control unit is compared with the version identifier of the configuration of the third control unit, preferably in the first or the third control unit;
vi) if the version identifier of the first control unit is more current than the version identifier of the third control unit, then
the configuration that is transferred from the first control unit to the third control unit is stored, otherwise
a) the configuration of the third control unit is transferred to the first control unit, and
b) the transferred configuration of the third control unit is stored in the first control unit;
or
if the version identifier of the third control unit is more current than the version identifier of the first control unit, then
the configuration that is transferred from the third control unit to the first control unit is stored, otherwise
a) the configuration of the first control unit is transferred to the third control unit; and
b) the transferred configuration of the first control unit is stored in the third control unit, or
step v) is carried out as follows:
v) the version identifier of the configuration of the first control unit is compared with the version identifier of the configuration of the third control unit, preferably in the first or the third control unit;
vi) the state of a configuration direction setting in the first or third control unit is queried by means of the first or third control unit;
vii) the configuration with the more current version identifier or with the older version identifier is determined depending upon the detected state of a configuration direction setting;
viii) if the configuration with the more current version identifier is not the configuration of the first or third control unit,
a) the configuration with the more current version identifier is transferred from the first or third control unit to the third or first control unit, and
b) the transferred configuration of the first or third control unit is stored in the third or first control unit;
or
if the configuration with the older version identifier is not the configuration of the first or third control unit,
a) the configuration with the older version identifier is transferred from the first or third control unit to the third or first control unit, and
b) the transferred configuration of the first or third control unit is stored in the third or first control unit.

11. Method according to Claim 1, **characterized in that** steps iv) and v) are carried out as follows:
iv) the state of a configuration direction setting in the first or third control unit is queried by the first or third control unit;
v) if the configuration direction setting has a first state,
the configuration of the first control unit is transferred to the third control unit, and the transferred configuration is stored in the third control unit; or
if the configuration direction setting has a second state,
the configuration of the third control unit is transferred to the first control unit, and the transferred configuration is stored in the first control unit.

12. Conveying device, comprising a first control unit with a first bus address and at least a second control unit with a second bus address, wherein the first control unit monitors and controls a first conveyor segment, and the second control unit monitors and controls a second conveyor segment, and the first control unit and the second control unit are connected by means of bus communication,
**characterized in that**
i) the first control unit is configured to detect a defect in the second control unit;
ii) the first control unit is configured to switch into a configuration mode when the first control unit detects the defect in the second control unit;
iii) the first control unit is configured to be put into a configuration mode;
iv) the first control unit is configured to transfer a configuration from the first control unit to the third control unit, and the third control unit is configured to transfer a configuration to the first control unit;
v) the third control unit is configured to store the configuration that has been transferred from the first control unit, and the first control unit is configured to store the configuration that has been transferred from the third control unit.

13. Conveying device according to Claim 12, **characterized in that** features iv) and v) are configured as follows:
iv) the first control unit is configured to transfer an individual bus address from the first control unit to the third control unit;
v) the third control unit is configured to store the individual bus address that has been transferred from the first control unit.

14. Conveying device according to Claim 13, **characterized in that**
- the second control unit is configured to transmit an activity signal via bus communication;
- the first control unit is configured to detect a defect in the second control unit based on the failure to receive an activity signal from the second control unit;
- the first control unit is configured to detect a defect in the second control unit based on the failure to receive an activity signal within a predetermined interval of time after the receipt of a preceding activity signal.

15. Conveying device according to Claims 13-14, **characterized in that**
the first control unit is configured to be put into the configuration mode by the failure to receive the activity signal, and/or
the first control unit is configured such that an error message is generated by the first control unit and is transmitted by means of bus communication if the activity signal is not received by the first control unit.

## Revendications

1. Procédé de remplacement d'une unité de commande défectueuse dans un dispositif de transport desservi par un bus, dans lequel le dispositif de transport comprend une première unité de commande doté d'une première adresse de bus et au moins une deuxième unité de commande dotée d'une deuxième adresse de bus,
dans lequel la première unité de commande commande un premier segment de transport et la deuxième unité de commande commande un deuxième segment de transport,
et la première unité de commande et la deuxième unité de commande sont reliées au moyen d'une communication par bus,
**caractérisé en ce que** les étapes suivantes sont exécutées :
i) détecter le défaut de la deuxième unité de commande au moyen de la première unité de commande,
ii) faire passer la première unité de commande dans un mode de configuration lorsque la première unité de commande détecte le défaut de la deuxième unité de commande,
iii) intégrer une troisième unité de commande dans la communication par bus après que la première unité de commande a été mise dans le mode de configuration,
iv) transférer une configuration de la première unité de commande à la troisième unité de commande ou de la troisième unité de commande à la première unité de commande,
v) stocker la configuration transférée depuis la première unité de commande dans la troisième unité de commande ou stocker la configuration transférée depuis la troisième unité de commande dans la première unité de commande.

2. Procédé selon la revendication 1, **caractérisé en ce que** les étapes iv) et v) sont remplacées par les étapes consistant à
iv) transférer une adresse de bus individuelle de la première unité de commande à la troisième unité de commande,
v) stocker l'adresse de bus individuelle transférée depuis la première unité de commande dans la troisième unité de commande.

3. Procédé selon la revendication 1 ou 2, **caractérisé en ce que**
la deuxième unité de commande émet un signal d'activité par l'intermédiaire des lignes de bus et la première unité de commande reçoit le signal d'activité de la deuxième unité de commande, et la détection du défaut de la deuxième unité de commande à l'étape i) est exécutée par l'absence de réception par la première unité de commande du signal d'activité de la deuxième unité de commande, en particulier **en ce que** la deuxième unité de commande émet un signal d'activité à des intervalles de temps réguliers prédéterminés et la détection d'une unité de commande défectueuse est exécutée par l'absence de réception du signal d'activité au cours de l'intervalle de temps prédéterminé après la réception d'un signal d'activité précédent, dans lequel la première unité de commande est de préférence mise dans le mode de configuration par l'absence de réception du signal d'activité, et/ou
en cas d'absence de réception du signal d'activité dans la première unité de commande, un message d'erreur est généré par la première unité de commande et est transféré au moyen de la communication par bus.

4. Procédé selon l'une des revendications 2 ou 3 précédentes, **caractérisé en ce que**
la troisième unité de commande émet un signal de présence après qu'elle a été intégrée dans la communication par bus, et la première unité de commande est mise dans le mode de configuration par la réception du signal de présence en provenance de la troisième unité de commande.

5. Procédé selon l'une des revendications 2-4 précédentes, **caractérisé en ce que**
la troisième unité de commande est intégrée, dans lequel
- la deuxième unité de commande est retirée ou
- la deuxième unité de commande reste en place.

6. Procédé selon l'une des revendications 2-5 précédentes, **caractérisé en ce qu'**à l'étape v),
la troisième unité de commande ne stocke une deuxième adresse de bus que lorsque la troisième unité de commande reçoit en provenance de la première unité de commande un message qui contient la première adresse de bus de la première unité de commande et une adresse de bus individuelle qui doit être attribuée à la troisième unité de commande.

7. Procédé selon l'une des revendications 2-6 précédentes,
**caractérisé en ce qu'**un troisième segment de transport comprend une quatrième unité de commande dotée d'une quatrième adresse de bus et la troisième unité de commande ne stocke l'adresse de bus individuelle à l'étape v) que lorsque la troisième unité de commande reçoit deux messages,
- dans lequel le premier message a été émis par la première unité de commande et contient la première adresse de bus de la première unité de commande et contient l'adresse de bus qui doit être attribuée à la troisième unité de commande,
- et le deuxième message a été émis par la quatrième unité de commande et contient la quatrième adresse de bus de la quatrième unité de commande et contient l'adresse de bus qui doit être attribuée à la troisième unité de commande
- et l'adresse de bus individuelle qui doit être attribuée à la troisième unité de commande est identique dans les deux messages.

8. Procédé selon l'une des revendications 2-7 précédentes,
**caractérisé en ce que**, lors d'une étape de sauvegarde précédente, la deuxième adresse de bus de la deuxième unité de commande était stockée dans la première unité de commande et la première adresse de bus de la première unité de commande était de préférence stockée dans la deuxième unité de commande,
et la troisième unité de commande est configurée au moyen de l'adresse de bus stockée de la deuxième unité de commande au moyen des étapes consistant à :
a) émettre la deuxième adresse de bus stockée de la deuxième unité de commande et la recevoir au moyen de la troisième unité de commande,
b) stocker dans la troisième unité de commande la deuxième adresse de bus de la deuxième unité de commande reçue par la troisième unité de commande,
c) le stockage dans la troisième unité de commande de la première adresse de bus de la première unité de commande, dans lequel, de préférence,
- lors d'une étape de sauvegarde précédente, une configuration de la deuxième unité de commande a été stockée dans la première unité de commande et une configuration de la première unité de commande a de préférence été stockée dans la deuxième unité de commande, et la troisième unité de commande est configurée au moyen de la configuration de la deuxième unité de commande stockée dans la première unité de commande, et/ou
- lors d'une étape de sauvegarde précédente, l'adresse de bus, ou en outre, la configuration de la deuxième unité de commande a été stockée dans une unité de commande d'un segment de transport non directement adjacent, et de préférence, l'adresse de bus ou en outre, la configuration de l'unité de commande qui n'est pas directement adjacente, a été stockée dans la deuxième unité de commande, et/ou
- lors d'une étape de sauvegarde précédente, l'adresse de bus, ou en outre, la configuration de la deuxième unité de commande a été stockée dans une pluralité d'unités de commande et de préférence, les adresses de bus, ou en outre, les configurations de la pluralité d'unités de commande ont été stockées dans la deuxième unité de commande.

9. Procédé selon les revendications 2-8,
**caractérisé en ce que**, lors d'une étape de sauvegarde précédente, la deuxième adresse de bus de la deuxième unité de commande, ou en outre, la configuration de la deuxième unité de commande
- a été stockée dans une unité de sauvegarde ou
- a été stockée dans un automate programmable ou
- a été stockée dans un serveur web,
en particulier, **en ce que** les adresses de bus individuelles, ou en outre, les configurations de toutes les unités de commande intégrées dans la communication par bus ont été stockées de manière centralisée dans une unité.

10. Procédé selon les revendications 1-9, **caractérisé en ce que**
- la configuration comprend le logiciel d'exploitation complet d'une unité de commande, ou
la configuration comprend une partie ou plusieurs parties d'un logiciel d'exploitation d'une unité de commande,
- dans lequel la configuration comprend de préférence un identificateur de version non ambigu au moyen duquel l'actualité de la configuration peut être déterminée, et comprend en particulier un identificateur de version non ambigu qui est attribué à une version de micrologiciel individuelle ou à une version de logiciel du logiciel d'exploitation d'une unité de commande,
et l'étape v) est de préférence exécutée comme suit :
v) comparer l'identificateur de version de la configuration de la première unité de commande à l'identificateur de version de la configuration de la troisième unité de commande, de préférence dans la première ou la troisième unité de commande,
vi) dans le cas où l'identificateur de version de la première unité de commande est plus récent que l'identificateur de version de la troisième unité de commande, stocker la configuration transférée depuis la première unité de commande ou,
dans le cas où l'identificateur de version de la première unité de commande est plus récent que l'identificateur de version de la troisième unité de commande, alors
a) transférer la configuration de la première unité de commande à la troisième unité de commande et
b) stocker la configuration transférée de la première unité de commande dans la troisième unité de commande,
ou l'étape v) est exécutée comme suit :
v) comparer l'identificateur de version de la configuration de la première unité de commande à l'identificateur de version de la configuration de la troisième unité de commande, de préférence dans la première ou la troisième unité de commande,
vi) dans le cas où l'identificateur de version de la première unité de commande est plus récent que l'identificateur de version de la troisième unité de commande, alors
stocker la configuration transférée de la première unité de commande à la troisième unité de commande, sinon
a) transférer la configuration de la troisième unité de commande à la première unité de commande et
b) stocker la configuration transférée depuis la troisième unité de commande dans la première unité de commande
ou
dans le cas où l'identificateur de version de la troisième unité de commande est plus récent que l'identificateur de version de la première unité de commande, alors
stocker la configuration transférée de la troisième unité de commande à la première unité de commande, sinon
a) transférer la configuration de la première unité de commande à la troisième unité de commande et
b) stocker la configuration transférée depuis la première unité de commande dans la troisième unité de commande, ou
l'étape v) est exécutée comme suit :
v) comparer l'identificateur de version de la configuration de la première unité de commande à l'identificateur de version de la configuration de la troisième unité de commande, de préférence dans la première ou la troisième unité de commande
vi) interroger un état d'un réglage de sens de configuration dans la première ou la troisième unité de commande au moyen de la première ou de la troisième unité de commande,
vii) en fonction de l'état déterminé d'un paramètre de sens de configuration, déterminer la configuration au moyen de l'identificateur de version plus récent ou de l'identificateur de version plus ancien,
viii) dans le cas où la configuration présentant l'identifiant de version plus récent n'est pas la configuration de la première ou de la troisième unité de commande,
a) transférer la configuration présentant l'identificateur de version plus récent de la première ou de la troisième unité de commande à la troisième ou à la première unité de commande et
b) stocker la configuration transférée de la première ou de la troisième unité de commande dans la troisième ou la première unité de commande
ou,
dans le cas où la configuration présentant l'identificateur de version plus ancien n'est pas la configuration de la première ou de la troisième unité de commande,
a) transférer la configuration présentant l'identificateur de version plus ancien de la première ou de la troisième unité de commande à la troisième ou à la première unité de commande et
b) stocker la configuration transférée de la première ou de la troisième unité de commande dans la troisième ou la première unité de commande.

11. Procédé selon la revendication 1, **caractérisé en ce**
**que** les étapes iv) et v) sont exécutées comme suit :
iv) interroger un état d'un réglage de sens de configuration dans la première ou la troisième unité de commande au moyen de la première ou de la troisième unité de commande,
v) dans le cas où le réglage du sens de configuration présente un premier état,
transférer la configuration de la première unité de commande à la troisième unité de commande et stocker la configuration transférée dans la troisième unité de commande, ou
dans le cas où le réglage du sens de configuration présente un deuxième état,
transférer la configuration de la troisième unité de commande à la première unité de commande et stocker la configuration transférée dans la première unité de commande.

12. Dispositif de transport comprenant une première unité de commande dotée d'une première adresse de bus et au moins une deuxième unité de commande dotée d'une deuxième adresse de bus, dans lequel la première unité de commande surveille et commande un premier segment de transport et la deuxième unité de commande surveille et commande un deuxième segment de transport, et la première unité de commande et la deuxième unité de commande sont reliées au moyen d'une communication par bus,
**caractérisé en ce que**
i) la première unité de commande est conçue pour détecter un défaut de la deuxième unité de commande,
ii) la première unité de commande est conçue pour passer dans un mode de configuration lorsque la première unité de commande détecte le défaut de la deuxième unité de commande,
iii) la première unité de commande est conçue pour être mise dans un mode configuration,
iv) la première unité de commande est conçue pour transférer une configuration depuis la première unité de commande à la troisième unité de commande et la troisième unité de commande est conçue pour transférer une configuration à la première unité de commande,
v) la troisième unité de commande est conçue pour stocker la configuration transférée depuis la première unité de commande et la première unité de commande est conçue pour stocker la configuration transférée depuis la troisième unité de commande.

13. Dispositif de transport selon la revendication 12, **caractérisé en ce que** les caractéristiques iv) et v) sont conçues comme suit :
iv) la première unité de commande est conçue pour transférer une adresse de bus individuelle de la première unité de commande à la troisième unité de commande,
v) la troisième unité de commande est conçue pour stocker l'adresse de bus individuelle transférée depuis la première unité de commande.

14. Dispositif de transport selon la revendication 13, **caractérisé en ce que**
- la deuxième unité de commande est conçue pour émettre un signal d'activité au moyen de la communication par bus,
- la première unité de commande est conçue pour détecter un défaut de la deuxième unité de commande par l'absence de réception d'un signal d'activité de la deuxième unité de commande,
- la première unité de commande est conçue pour détecter un défaut de la deuxième unité de commande par l'absence de réception d'un signal d'activité au cours d'un intervalle de temps prédéterminé après la réception d'un signal d'activité précédent.

15. Dispositif de transport selon les revendications 13-14, **caractérisé en ce que**
la première unité de commande est conçue pour être mise dans le mode de configuration par l'absence de réception du signal d'activité, et/ou
la première unité de commande est conçue pour générer un message d'erreur au moyen de la première unité de commande lors de l'absence de réception du signal d'activité dans la première unité de commande et pour le transférer au moyen de la communication par bus.
